# EUROPEAN PATENT APPLICATION

(11) **EP 3 929 228 A1**
(43) Date of publication of application: **29.12.2021**
(21) Application number: 20759024.1
(22) Date of filing: 18.02.2020
(51) Int. Cl.: C08G 16/00, C08G 61/12, C08L 27/12, C08L 61/00, C08L 65/00, H01M 4/13, H01M 4/131, H01M 4/133, H01M 4/134, H01M 4/136, H01M 4/137, H01M 4/36, H01M 4/38, H01M 4/48, H01M 4/525, H01M 4/58, H01M 4/587, H01M 4/60, H01M 4/62, C01B 32/15, C08K 3/01

(54) **BATTERY MATERIAL AND ELECTRODE MATERIAL**

(30) Priority: 21.02.2019 JP 2019029674; 29.11.2019 JP 2019216455
(71) Applicant: Nissan Chemical Corporation, Tokyo 103-6119 (JP)
(72) Inventor: KASEYAMA, Takahiro, Funabashi-shi, Chiba 274-0052 (JP); ODAKA, Kazutoshi, Funabashi-shi, Chiba 274-0052 (JP); KATO, Hirokazu, Funabashi-shi, Chiba 274-0052 (JP); ISAJI, Tadayuki, Funabashi-shi, Chiba 274-0052 (JP)
(74) Representative: Mewburn Ellis LLP
(86) International application number: PCT/JP2020/006315
(87) International publication number: WO 2020/171074

(57) **Abstract**

Provided is a battery material that contains a carbon nanostructure having charge storage capacity, and that is characterized in that the carbon nanostructure provides a discharge capacity of 10 mAh/g or more in a secondary battery including an electrode in which only the carbon nanostructure is used as an active material.

## Description

### TECHNICAL FIELD

The present invention relates to a battery material containing a carbon nanostructure having charge storage capacity, and an electrode material containing an organic compound having charge storage capacity and an inorganic active material.

### BACKGROUND ART

In recent years, downsizing and weight reduction of electronic devices have been promoted, and downsizing and weight reduction of batteries serving as power sources for the electronic devices have been also required. Non-aqueous electrolyte secondary batteries such as lithium ion batteries have been put into practical use as small, lightweight, and high capacity chargeable and dischargeable batteries, and have been used in portable electronic devices such as small video cameras, mobile phones, and notebook computers, communication devices, and the like.

A lithium ion secondary battery has high energy density, and has excellent advantages such as higher capacity and operating voltage than other batteries. However, due to the high energy density, there is a risk of overheating or leading to an accident such as ignition depending on usage conditions, and high safety is required. In particular, in a recently highlighted hybrid vehicle, higher energy density and output characteristics are required, and thus higher safety is required.

In general, a lithium ion secondary battery is composed of a positive electrode, a negative electrode, and an electrolyte, and at the time of charging, lithium ions come out of a positive electrode active material into the electrolyte and are inserted into a negative electrode active material such as carbon particles. At the time of discharging, lithium ions come out of the negative electrode active material into the electrolyte and are inserted into the positive electrode active material, whereby a current can be taken out to the external circuit. As described above, in the lithium ion secondary battery, lithium ions move back and forth between the positive electrode and the negative electrode via the electrolyte, whereby charging and discharging are performed.

On the other hand, as performance of portable electronic devices and the like is improved, batteries with higher capacity are required, and Sn, Si and the like, which have a capacity per unit weight much higher than that of existing carbon, are actively studied as negative electrode active materials. However, when Si or a Si alloy is used as the negative electrode active material, there is a problem that volume expansion increases and cycle characteristics deteriorate. In order to solve this problem, graphite is mixed thereto, but when graphite is non-uniformly distributed at the time of mixing, cycle characteristics (life) may be deteriorated.

In addition, in recent years, with the versatility of lithium ion secondary batteries such as high-output power supplies for plug-in hybrid vehicles, hybrid vehicles, electric tools, and the like, further improvement of rate characteristics is required. Batteries used as these high-output power supplies are required to perform charging and discharging at high speed.

In the positive electrode active material currently put to practical use, theoretical capacity of the positive electrode active material is much lower than theoretical capacity of the negative electrode active material. Therefore, in order to realize high capacity and high output of the lithium ion battery, it is necessary to impart high conductivity and ion conductivity to the positive electrode. Accordingly, in order to improve electron conductivity in the positive electrode, a method of adding a carbon material to the electrode is used as a conductive additive. As such a carbon material, there have been reported examples using graphite, acetylene black, Ketjen black, and in recent years, carbon nanotubes or graphene. However, when the amount of such a conductive additive is increased, the amount of active material in the electrode decreases, and the capacity of the battery decreases.

In addition, in order to enhance electron conductivity of the electrode material, there has also been proposed an electrode material in which particle surface of the electrode active material is covered with an organic compound as a carbon source, and then the organic compound is carbonized to form a carbonaceous film on the surface of the electrode active material, and carbon of the carbonaceous film is interposed as an electron conductive substance (For example, Patent Document 1). However, the carbonization step requires a long-time heat treatment at a high temperature of 500°C or higher in an inert gas atmosphere, and this heat treatment reduces capacity of the electrode. In addition, since the positive electrode active material itself is heated at a high temperature of 500 to 800°C in a reducing atmosphere or an inert atmosphere during the carbonization treatment, there is a possibility that the positive electrode active material itself is also reduced, and thus usable positive electrode active material has been limited to lithium iron phosphate, lithium nickel phosphate, lithium cobalt phosphate, lithium manganese phosphate, and the like. The carbon source in the case of other positive electrode active materials has been limited to a polymer material having conductivity. As described above, the material suitable for improving the electron conductivity of the electrode material is still limited, and further improvement is desired.

### PRIOR ART DOCUMENTS

### PATENT DOCUMENTS

Patent Document 1: JP-A 2001-15111

### SUMMARY OF INVENTION

### TECHNICAL PROBLEM

The present invention has been made in view of the above circumstances, and an object thereof is to provide a battery material and an electrode material that can be suitably used as a material for forming a battery such as a lithium ion secondary battery and can improve rate characteristics of the battery.

### SOLUTION TO PROBLEM

As a result of intensive studies to achieve the above object, the present inventors have found that a battery produced using a battery material containing a carbon nanostructure having charge storage capacity and a battery produced using an electrode material containing an organic compound having charge storage capacity and an inorganic active material are excellent in rate characteristics, and have completed the present invention.

That is, the present invention provides the following battery material and electrode material.
1. A battery material comprising a carbon nanostructure having charge storage capacity, wherein the carbon nanostructure provides a discharge capacity of 10 mAh/g or more in a secondary battery including an electrode using only the carbon nanostructure as an active material.
2. The battery material according to 1, wherein the discharge capacity is 30 mAh/g or more.
3. The battery material according to 2, wherein the discharge capacity is 45 mAh/g or more.
4. The battery material according to any one of 1 to 3, wherein the carbon nanostructure is a carbon quantum dot.
5. The battery material according to any one of 1 to 4, wherein the carbon nanostructure is non-conductive and contains nitrogen.
6. The battery material according to 5, wherein the nitrogen is derived from amines.
7. The battery material according to any one of 1 to 6, wherein carbon contained in the carbon nanostructure is derived from polycarboxylic acid or saccharides.
8. The battery material according to any one of 1 to 7, further comprising an inorganic active material, conductive carbon, and a binder.
9. The battery material according to 8, wherein the inorganic active material is at least one selected from a metal, a metalloid, a metal alloy, a metal oxide, a metalloid oxide, a metal phosphate, a metal sulfide, and a metal nitride.
10. The battery material according to 9, wherein the inorganic active material is at least one selected from FeS₂, TiS₂, MoS₂, LiFePO₄, V₂O₆, V₆O₁₃, MnO₂, LiCoO₂, LiMnO₂, LiMn₂O₄, LiMo₂O₄, LiV₃O₈, LiNiO₂, Li_{z}Ni_{y}M_{1-y}O₂ (provided that M represents at least one or more metal element selected from Co, Mn, Ti, Cr, V, Al, Sn, Pb, and Zn, and 0.05 ≤ z ≤ 1.10, 0.5 ≤ y ≤ 1.0), Li(NiₐCo_{b}Mn_{c})O₂ (provided that 0 < a < 1, 0 < b < 1, 0 < c < 1, a + b + c = 1), Li₄Ti₅O₁₂, Si, SiOₓ, AlOₓ, SnOₓ, SbOₓ, BiOx, GeOₓ, AsOₓ, PbOₓ, ZnOₓ, CdOₓ, InOₓ, TiOₓ and GaOₓ (provided that 0 < x ≤ 2).
11. The battery material according to any one of 8 to 10, wherein the battery material is for electrode formation.
12. An electrode material comprising an organic compound having charge storage capacity and an inorganic active material, wherein a content of the organic compound is 1 wt% or less in a solid content.
13. The electrode material according to 12, wherein the inorganic active material is at least one selected from a metal, a metalloid, a metal alloy, a metal oxide, a metalloid oxide, a metal phosphate, a metal sulfide, and a metal nitride.
14. The electrode material according to 13, wherein the inorganic active material is at least one selected from FeS₂, TiS₂, MoS₂, LiFePO₄, V₂O₆, V₆O₁₃, MnO₂, LiCoO₂, LiMnO₂, LiMn₂O₄, LiMo₂O₄, LiV₃O₈, LiNiO₂, Li_{z}Ni_{y}M_{1-y}O₂ (provided that M represents at least one or more metal element selected from Co, Mn, Ti, Cr, V, Al, Sn, Pb, and Zn, and 0.05 ≤ z ≤ 1.10, 0.5 ≤ y ≤ 1.0), Li(NiₐCo_{b}Mn_{c})O₂ (provided that 0 < a < 1, 0 < b < 1, 0 < c < 1, a + b + c = 1), Li₄Ti₅O₁₂, Si, SiOx, AlOx, SnOx, SbOx, BiOx, GeOx, AsOx, PbOx, ZnOx, CdOx, InOx, TiOx and GaOx (provided that 0 < x ≤ 2).
15. An electrode comprising an active material layer made of the battery material according to 11 or the electrode material according to any one of 12 to 14.
16. A secondary battery comprising the electrode according to 15.
17. A method for producing the battery material according to any one of 1 to 11, the method comprising:
   a step of synthesizing a carbon nanostructure by mixing polycarboxylic acid or saccharides, amines, and a solvent, and heating the mixture.
18. The method for producing the battery material according to 17, wherein the synthesis is performed by solvothermal synthesis.
19. The method for producing the battery material according to 18, wherein the synthesis is performed by hydrothermal synthesis.
20. The method for producing the battery material according to 19, comprising a step of replacing a solvent of the carbon nanostructure aqueous solution obtained by hydrothermal synthesis by an organic solvent.
21. The method for producing the battery material according to any one of 8 to 10, the method comprising:
   a step of preparing a solution or dispersion containing an inorganic active material and a carbon nanostructure, and then removing a solvent to prepare a composite of the inorganic active material and the carbon nanostructure.

### ADVANTAGEOUS EFFECTS OF INVENTION

By using the battery material and the electrode material of the present invention, a battery having excellent rate characteristics can be provided.

### DESCRIPTION OF EMBODIMENTS

### [First invention]

A battery material according to a first invention includes a carbon nanostructure having charge storage capacity. In the first invention, a battery having excellent rate characteristics and cycle characteristics can be obtained by using a carbon nanostructure having such characteristics. In the first invention, the phrase "having charge storage capacity" means to provide a discharge capacity of 10 mAh/g or more in a secondary battery including an electrode using only a carbon nanostructure having charge storage capacity as an active material. The discharge capacity is preferably 30 mAh/g or more and more preferably 45 mAh/g or more, from the viewpoint of improving rate characteristics and cycle characteristics. The upper limit is not particularly limited, but is usually 200 mAh/g or less in consideration of degradation during cycles. In the present invention, the discharge capacity is within the above ranges, whereby decrease in the charge capacity is reduced as compared with that in the case of blending a compound having no capacity by itself.

The carbon nanostructure contained in the battery material is generally a structure composed mainly of carbon atoms, and at least one of three-dimensional dimensions of the structure is in a region of nanometers, for example, has an order of several nanometers to several hundreds of nanometers.

Examples of the carbon nanostructure include carbon quantum dots, graphene quantum dots, and the like, and among them, carbon quantum dots which are carbon materials with an average particle size of 20 nm or less are preferable.

The average particle size is a value measured by a transmission electron microscope (TEM) .

In addition, the carbon nanostructure is preferably non-conductive from the viewpoint of further improving discharge capacity of a battery to be obtained. In the present invention, the term "non-conductive" means that a conductivity of the obtained carbon nanostructure powder to be measured with a low resistance meter Loresta-GP manufactured by Mitsubishi Chemical Analytech Co., Ltd. is equal to or less than a detection limit (resistance value is more than 10⁷ Ω).

The carbon nanostructure preferably contains nitrogen. The nitrogen content of the carbon nanostructure is not particularly limited as long as it contains nitrogen, but is preferably 5 to 30 wt%, more preferably 10 to 25 wt%, and still more preferably 10 to 20 wt%, in consideration of further improving discharge capacity of a battery to be obtained.

The carbon nanostructure can be produced by a known method, and can be obtained, for example, by using a carbon source composed of polycarboxylic acid or saccharides and a nitrogen source composed of amines as raw materials, mixing them with a solvent, and heating the mixture.

The polycarboxylic acid is not particularly limited as long as it is a carboxylic acid having two or more carboxy groups. Specific examples thereof include citric acid, oxalic acid, malonic acid, succinic acid, fumaric acid, itaconic acid, malic acid and tartaric acid, quinic acid, galactaric acid, glyceric acid, gluconic acid, glucuronic acid, ascorbic acid, gallic acid, and the like. Among them, citric acid, succinic acid, and oxalic acid are preferable, and citric acid is more preferable. The polycarboxylic acids may be used singly or in combination of two or more kinds thereof.

Examples of the saccharides include monosaccharides, disaccharides, and polysaccharides. These saccharides may be used singly or in combination of two or more kinds thereof.

The monosaccharides are preferably one having 3 to 9 carbon atoms, and particularly 5 to 6 carbon atoms. Specifically, examples thereof include pentoses such as xylose; hexoses such as glucose, mannose, and galactose; deoxyhexoses such as fucose; hexosamines such as glucosamine and galactosamine; hexosamine derivatives such as N-acetylglucosamine and N-acetylgalactosamine; sialic acids such as neuraminic acid, N-acetylneuraminic acid, and N-glycolylneuraminic acid; uronic acids such as glucuronic acid and iduronic acid; and the like. Among them, hexose is preferable, and glucose is more preferable. The monosaccharides may be used singly or in combination of two or more kinds thereof.

Examples of the disaccharides include sucrose, lactulose, lactose, maltose, trehalose, cellobiose, and the like. The disaccharides may be used singly or in combination of two or more kinds thereof.

Examples of the polysaccharides include starch, amylose, amylopectin, glycogen, cellulose, chitin, agarose, carrageenan, heparin, hyaluronic acid, pectin, xyloglucan, glucomannan, and the like. Among them, those which are dissolved in water are preferable from the viewpoint of synthesis. The polysaccharides may be used singly or in combination of two or more kinds thereof.

Examples of the amines include aliphatic amines, aromatic amines, hydroxylamines, polyamines, heterocyclic amines, amino acids, amino group-containing polyalkylene glycols, and the like. Among them, aliphatic amines, aromatic amines and amino acids are preferred. The amines may be used singly or in combination of two or more kinds thereof.

Examples of the aliphatic amine include monoamines such as methylamine, ethylamine, n-propylamine, isopropylamine, n-butylamine, isobutylamine, s-butylamine, t-butylamine, n-pentylamine, 1-methyl-n-butylamine, 2-methyl-n-butylamine, 3-methyl-n-butylamine, 1,1-dimethyl-n-propylamine, 1,2-dimethyl-n-propylamine, 2,2-dimethyl-n-propylamine, 1-ethyl-n-propylamine, n-hexylamine, 1-methyl-n-pentylamine, 2-methyl-n-pentylamine, 3-methyl-n-pentylamine, 4-methyl-n-pentylamine, 1,1-dimethyl-n-butylamine, 1,2-dimethyl-n-butylamine, 1,3-dimethyl-n-butylamine, 2,2-dimethyl-n-butylamine, 2,3-dimethyl-n-butylamine, 3,3-dimethyl-n-butylamine, 1-ethyl-n-butylamine, 2-ethyl-n-butylamine, 1,1,2-trimethyl-n-propylamine, 1,2,2-trimethyl-n-propylamine, 1-ethyl-1-methyl-n-propylamine, 1-ethyl-2-methyl-n-propylamine, 2-ethylhexylamine, 2-aminoethanol, 1-amino-2-propanol, 2-amino-1-propanol, and 2-aminoethanethiol; and diamines such as ethylenediamine, N,N-dimethylethylenediamine, N,N'-dimethylethylenediamine, N,N-diethylethylenediamine, N,N'-diethylethylenediamine, N-ethylethylenediamine, diethylenetriamine, 1,2-diaminopropane, 1,3-diaminopropane, 2-(2-aminoethylamino)ethanol, N-isopropylethylenediamine, N-isopropyl-1,3-diaminopropane, triethylenetetramine, N,N'-bis(2-hydroxyethyl)ethylenediamine, 2,2-dimethyl-1,3-propanediamine, 2-methyl-2,3-propanediamine, 1,2-diamino-2-methylpropane, 3,3'-diamino-N-methyldipropylamine, 2,3-dimethyl-2,3-butanediamine, 3,3'-diaminodipropylamine, N,N-bis(2-aminoethyl)-1,3-propanediamine, triethylenetetramine, 2,2'-oxybis(ethylamine), tetramethylenediamine, 1,4-diaminobutane, 2,2'-thiobis(ethylamine), 1,5-diaminopentane, 2-methyl-1,5-diaminopentane, 1,6-diaminoheptane, 1,7-diaminopentane, 1,10-diaminodecane, 1,11-diaminoundecane, 1,12-diaminododecane, N,N'-bis(3-aminopropyl)ethylenediamine, diethylene glycol bis(3-aminopropyl) ether, 1,14-diamino-3,6,9,12-tetraoxatetradecane, bis(aminomethyl)cyclohexane, 1,2-cyclohexanediamine, 1,3-cyclohexanediamine, 1,4-cyclohexanediamine, bis(aminomethyl)norbornane, 1,4-bis(aminomethyl)cyclohexane, and 1,2-bis(2-aminoethoxy)ethane. In the present invention, among them, a compound having two or more amino groups is preferable, and a diamine having 2 carbon atoms between the amino groups is more preferable.

Examples of the aromatic amine include aralkyl monoamines such as benzylamine, p-methoxycarbonylbenzylamine, p-ethoxycarbonylphenylbenzyl, p-methylbenzylamine, m-methylbenzylamine, and o-methoxybenzylamine; arylmonoamines such as aniline, p-methoxycarbonylaniline, p-ethoxycarbonylaniline, p-methoxyaniline, 1-naphthylamine, 2-naphthylamine, anthranilamine, 1-aminopyrene, 4-biphenylylamine, o-phenylaniline, 4-amino-p-terphenyl, and 2-aminofluorene; phenylenediamine and derivatives thereof. Examples thereof include aryldiamines such as 1,2-phenylenediamine, 1,3-phenylenediamine, 1,4-phenylenediamine, 3-nitro-1,2-phenylenediamine, 4-nitro-1,2-phenylenediamine, 3-methyl-1,2-phenylenediamine, 4-methyl-1,2-phenylenediamine, 1,2,4-benzenetriamine, 3,4-dimethyl-1,2-phenylenediamine, 4,5-dimethyl-1,2-phenylenediamine, 3-fluoro-1,2-phenylenediamine, 4-fluoro-1,2-phenylenediamine, 3,4-difluoro-1,2-phenylenediamine, 3,5-difluoro-1,2-phenylenediamine, 4,5-difluoro-1,2-phenylenediamine, 3-chloro-1,2-phenylenediamine, 4-chloro-1,2-phenylenediamine, 3,4-dichloro-1,2-phenylenediamine, 3,5-dichloro-1,2-phenylenediamine, 4,5-dichloro-1,2-phenylenediamine, 3-bromo-1,2-phenylenediamine, 4-bromo-1,2-phenylenediamine, 3,4-dibromo-1,2-phenylenediamine, 3,5-dibromo-1,2-phenylenediamine, 4,5-dibromo-1,2-phenylenediamine, 2,3-naphthalenediamine, benzidine, 3,3'-diaminobenzidine, 3,4-diaminobenzoic acid, 3,4-diaminobenzoic acid methyl, 3,4-diaminobenzoic acid ethyl, 4-(4-aminophenoxy)-1,2-benzenediamine, 3,4-diaminobenzophenone, and 5,6-diamino-1,3-dihydro-2H-benzimidazol-2-one.

Examples of the heterocyclic amine include barbituric acid, aziridine, azetidine, pyrrolidine, piperidine, piperazine, azepane, pyridine, pyridazine, pyrimidine, pyrazine, imidazole, benzimidazole, pyrazole, oxazole, isoxazole, benzoxazole, thiazole, isothiazole, benzothiazole, triazine, azepine, diazepine, benzodiazepine, pyrrole, imidazoline, morpholine, thiazine, indole, isoindole, purine, quinoline, isoquinoline, quinoxaline, pteridine, acridine, carbazole, cinnoline, benzo-C-cinnoline, porphyrin, chlorine, choline, triaminotriazine, trichlorotriazine, and derivatives thereof. These may be used singly or in combination of two or more kinds thereof.

Examples of the amino acid include cysteine, glycine, alanine, valine, phenylalanine, threonine, lysine, asparagine, tryptophan, serine, glutamic acid, aspartic acid, ornithine, thyroxine, cystine, leucine, isoleucine, proline, tyrosine, asparagine, glutamine, histidine, methionine, threonine, and the like. Examples of the amino group-containing polyalkylene glycol include amino group-containing polyethylene glycol, amino group-containing polypropylene glycol, and the like. When the amino acid has an optical isomer, the amino acid may be a D-form, an L-form, or a racemic form.

The use amount of the amines is preferably 10 to 300 parts by weight and more preferably 20 to 150 parts by weight per 100 parts by weight of the carbon source, from the viewpoint of nitrogen introduction efficiency.

As the raw material, an organic compound other than the carbon source and the nitrogen source may be further used. Such an organic compound is not particularly limited as long as it does not interfere with the effect of the present invention.

The solvent is not particularly limited as long as it can dissolve the raw materials to be used. Examples of such a solvent include water, dimethyl sulfoxide, N,N-dimethylformamide, N,N-dimethylacetamide, N-methyl-2-pyrrolidone (NMP), hexamethylphosphoric acid triamide, acetonitrile, acetone, alcohols (methanol, ethanol, 1-propanol, 2-propanol, etc.), glycols (ethylene glycol, triethylene glycol, etc.), cellosolves (ethyl cellosolve, methyl cellosolve, etc.), polyhydric alcohols (glycerin, pentaerythritol, etc.), tetrahydrofuran, toluene, ethyl acetate, butyl acetate, benzene, toluene, xylene, pentane, hexane, heptane, chlorobenzene, dichlorobenzene, trichlorobenzene, hexadecane, benzyl alcohol, oleylamine, and the like. In the present invention, among them, water is preferable. The solvents may be used singly or in admixture of two or more kinds thereof.

The amount of the solvent used is preferably 100 to 10,000 parts by weight and more preferably 400 to 2,500 parts by weight per 100 parts by weight of the raw material, from the viewpoint of obtaining a carbon nanostructure with a uniform particle size.

When synthesizing the carbon nanostructures, an acid catalyst or a surfactant may be further contained as necessary.

The acid catalyst may be a homogeneous acid catalyst or a heterogeneous acid catalyst, but a heterogeneous acid catalyst is preferable from the viewpoint of improving quantum yield. Examples of the homogeneous acid catalyst include inorganic acids such as hydrochloric acid, sulfuric acid, nitric acid, and phosphoric acid, and organic acids such as sulfonic acid and p-toluenesulfonic acid. On the other hand, the heterogeneous acid catalyst is preferably a solid acid catalyst, and examples thereof include a cationic ion exchange resin, a cationic ion exchange membrane, a solid acid catalyst described in Nature 438, p. 178 (2005), and the like. As the solid acid catalyst, a commercially available product can be used, and examples thereof include AMBERLYST (registered trademark) 15, 16, 31, 35 and the like and AMBERLITE (registered trademark) IR120B, IR124, 200CT, 252 and the like of ion exchange resins manufactured by Rohm and Haas Company, NAFION (registered trademark) of ion exchange membranes manufactured by DuPont, inorganic solid acid catalysts such as zeolite and polyphosphoric acid, and the like. The acid catalysts may be used singly or in combination of two or more kinds thereof.

When a homogeneous acid catalyst is used, 0.01 to 10 parts by weight is usually added to 100 parts by weight of the raw material, but 0.1 to 5 parts by weight is more preferable, and 0.5 to 1 parts by weight is still more preferable.

The heterogeneous acid catalyst is preferably a porous body having pores capable of enclosing the produced carbon nanostructures. The size of the pores can control particle diameter or disk diameter of the carbon nanostructures to be produced. In general, it is preferable to produce carbon quantum dots with a particle diameter (disk diameter) of up to 20 nm by a solid acid catalyst of a porous body having a pore diameter of up to 20 nm.

When a heterogeneous acid catalyst is used, addition of about 0.1 to 100 parts by weight to 100 parts by weight of the raw material is preferable, addition of 1.0 to 50 parts by weight is more preferable, and addition of 5.0 to 10 parts by weight is still more preferable.

Examples of the surfactant include cationic surfactants, anionic surfactants, and nonionic surfactants.

Examples of the cationic surfactant include cetyltrimethylammonium bromide, cetyltrimethylammonium chloride, and the like. Examples of the anionic surfactant include sodium dodecyl sulfate, sodium dodecylbenzene sulfonate, and the like. Examples of the nonionic surfactant include polyethylene glycol, polypropylene glycol, and the like. These surfactants may be used singly or in combination of two or more kinds thereof.

The amount of the surfactant used is preferably 10 to 2,000 parts by weight and more preferably 50 to 500 parts by weight per 100 parts by weight of the raw material, from the viewpoint of dispersibility of the raw material and critical micelle concentration under synthesis conditions.

When synthesizing the carbon nanostructures, the above components may be mixed in any order. In addition, the synthesis may be performed continuously or batchwise. In the present invention, the continuous method can be suitably employed in that a large amount of carbon nanostructures having a uniform particle size can be continuously and efficiently produced.

As the continuous method, for example, a flow-type reactor (flow reactor) can be suitably employed. As the flow reactor, a known device can be used, and examples thereof include a flow-type high temperature reaction system Phoenix Flow Reactor manufactured by Thales Nanotechnology Inc., and the like. By using the flow reactor, the reaction (solvothermal synthesis, hydrothermal synthesis) under high temperature and pressure can be continuously and efficiently carried out.

Reaction temperature can be appropriately adjusted according to conditions such as the type of solvent used in the raw material solution, and is not particularly limited, but is preferably about 100 to 450°C, more preferably 150 to 400°C, and still more preferably 250 to 350°C, from the viewpoint of efficiently carrying out the reaction. If the reaction temperature is too high, a carbide insoluble in the reaction solvent may be generated.

In addition, the reaction time (residence time) is preferably 1 to 30 minutes, preferably 1.5 to 20 minutes, and more preferably 2 to 16 minutes, from the viewpoint of completely advancing the reaction and suppressing the generation of carbide insoluble in the reaction solvent.

When the batch method is employed, heating may be performed under normal pressure (atmospheric pressure) or under pressure (solvothermal synthesis, hydrothermal synthesis).

When the reaction is performed at normal pressure, the reaction temperature is usually preferably about 40 to 250°C, more preferably 60 to 200°C, and still more preferably 100 to 150°C although it depends on the boiling point of the solvent to be used. Heating is usually performed in a water bath or an oil bath, but heating can also be performed with microwaves. Thus, for example, when water is used as the solvent, a product can be obtained in a shorter time than when heating in a water bath or an oil bath.

When the reaction is performed at normal pressure, the reaction time is preferably about 1 minute to 240 hours, more preferably about 10 minutes to 48 hours, and still more preferably about 12 to 30 hours.

In the case of pressurization, for example, an autoclave can be suitably used. By using the autoclave, the reaction temperature can be raised to a temperature equal to or higher than the boiling point at normal pressure. For example, even when using water as the solvent, a reaction temperature of about 200°C can be easily achieved by performing the reaction using an autoclave.

The reaction temperature depends on the boiling point of the solvent to be used as in the case of performing the reaction at normal pressure, but is usually preferably about 100 to 450°C, more preferably 150 to 400°C, and still more preferably 250 to 350°C. In addition, the reaction time is preferably about 30 seconds to 24 hours, more preferably about 1 minute to 1 hour, and still more preferably about 2 minutes to 10 minutes.

The pressurization is not particularly limited as long as a desired reaction temperature can be achieved, but it is preferably about 200 kPa to 20.0 MPa, and more preferably about 500 kPa to 15.0 MPa.

Moreover, when using a solid acid catalyst in the batch method, it is preferable to perform the reaction by stirring, and a good result is obtained by increasing stirring rate within a range in which the solid catalyst is not crushed. The stirring rate is preferably about 10 to 500 rpm, and more preferably about 50 to 300 rpm.

The average particle size of the carbon nanostructures obtained by each of the above methods is preferably 20 nm or less, more preferably 15 nm or less, and still more preferably 10 nm or less. Also, the lower limit of the particle size is not particularly limited, but is usually 1 nm or more. If the particle size is within the above ranges, the particles do not aggregate in the solvent, and aggregates are not generated even during preparation or coating of a composition for electrode formation (electrode slurry or the like). In addition, since the particle size of the carbon nanostructure is sufficiently small with respect to size of the inorganic active material, the carbon nanostructure is excellent in coatability to the inorganic active material.

The obtained product can be purified by removing low-molecular-weight impurities by dialysis, ultrafiltration, or the like, and then removing high-molecular-weight impurities by centrifugation or the like. Pore size of a dialysis membrane or an ultrafiltration membrane and centrifugal force during centrifugation may be appropriately set according to molecular weight of the object to be removed.

In order to perform purification to a higher purity, column purification may be performed. A column filler in this case may be a normal phase or a reverse phase. As the normal phase filler, silica particles, alumina particles, and the like can be used. On the other hand, as the reverse phase filler, silica particles surface-modified with a long-chain alkyl group and the like can be used. Further, in terms of time reduction, pressurization may be performed during column purification.

When the battery material is prepared using the carbon nanostructure, the carbon nanostructure may be used in the state of a solution after the reaction, or may be used after the solvent is removed to isolate the battery material. When a solvent different from the solvent used in the synthesis of the carbon nanostructures is used in preparing the battery material, the solvent may be substituted to obtain a desired solvent system.

The battery material of the present invention can be used for formation of an undercoat layer and an active material layer of an electrode, preparation of an electrolyte, and the like, and in particular, can be suitably used as a material for forming the active material layer of the electrode.

When the active material layer of the electrode is formed using the battery material, it is preferable to contain the following inorganic active material, a conductive additive, a binder, and a solvent (dispersion medium) as necessary.

In the battery material, the compounding amount of the carbon nanostructure varies depending on required electrical and thermal characteristics, viscosity of the material, production cost, and the like, but is preferably 0.01 to 1.0 wt%, more preferably 0.01 to 0.75 wt%, and still more preferably 0.05 to 0.5 wt% in a solid content. By setting the compounding amount of the carbon nanostructure within the above ranges, a battery having excellent rate characteristics and cycle characteristics can be obtained.

The solid content referred to herein means components other than the solvent contained in the battery material of the present invention.

As the inorganic active material (hereinafter, it may be simply referred to as an "active material".), various active materials conventionally used for an electrode for an energy storage device such as a secondary battery can be used, and examples thereof include a metal, a metalloid, a metal alloy, a metal oxide, a metalloid oxide, a metal phosphorus oxide, a metal sulfide, and a metal nitride.

Specific examples of the inorganic active material include the following materials. Examples of the metal active material include Al, Sn, Zn, and the like.

Examples of the semimetal active material include Si, Ge, As, and the like.

Examples of the active material of the metal alloy include Li-Al-based alloys, Li-Mg-based alloys, Li-Al-Ni-based alloys, Na-Hg-based alloys, Na-Zn-based alloys, and the like.

Examples of the active material of the metal oxide include AlOx, SnOx, SbOx, BiOx, PbOx, ZnOx, CdOx, InOx, TiOx and GaOx (provided that 0 < x ≤ 2), V₂O₆, V₆O₁₃, MnO₂, LiCoO₂, LiMnO₂, LiMn₂O₄, LiMo₂O₄, LiV₃O₈, LiNiO₂, Li_{z}Ni_{y}M_{1-y}O₂ (provided that M represents at least one or more metal element selected from Co, Mn, Ti, Cr, V, Al, Sn, Pb, and Zn, and 0.05 ≤ z ≤ 1.10, 0.5 ≤ y ≤ 1.0), ternary active materials (Li(NiₐCo_{b}Mn_{c})O₂ (provided that 0 < a < 1, 0 < b < 1, 0 < c < 1, a + b + c = 1)), tin silicon oxide (SnSiO₃), lithium bismuth oxide (Li₃BiO₄), lithium zinc oxide (Li₂ZnO₂), lithium titanium oxide (Li₄Ti₅O₁₂), and the like.

Examples of the active material of the metalloid oxide include SiOₓ, GeOₓ, AsOₓ (provided that 0 < x ≤ 2), and the like.

Examples of the active material of the metal phosphate include LiFePO₄ and the like.

Examples of the active material of the metal sulfide include FeS₂, TiS₂, MoS₂, Li₂S, lithium iron sulfides (LiₓFeS₂ (provided that 0 < x ≤ 3)), lithium copper sulfides (LiₓCuS (provided that 0 < x ≤ 3)), and the like.

Examples of the active material of the metal nitride include LiₓM_{y}N (provided that M = Co, Ni, Cu, 0 ≤ x ≤ 3, 0 ≤ y ≤ 0.5, and x and y are not 0 at the same time), lithium iron nitride (Li₃FeN₄), and the like.

In the present invention, among them, FeS₂, TiS₂, MoS₂, LiFePO₄, V₂O₆, V₆O₁₃, MnO₂, LiCoO₂, LiMnO₂, LiMn₂O₄, LiMo₂O₄, LiV₃O₈, LiNiO₂, Li_{z}Ni_{y}M_{1-y}O₂ (provided that M represents at least one or more metal element selected from Co, Mn, Ti, Cr, V, Al, Sn, Pb, and Zn, and 0.05 ≤ z ≤ 1.10, 0.5 ≤ y ≤ 1.0), Li(NiₐCo_{b}Mn_{c})O₂ (provided that 0 < a < 1, 0 < b < 1, 0 < c < 1, a + b + c = 1), Li₄Ti₅O₁₂, Si, SiOx, AlOx, SnOx, SbOx, BiOx, GeOx, AsOx, PbOx, ZnOx, CdOx, InOx, TiOx and GaOx (provided that 0 < x ≤ 2) are preferable, and TiOₓ (provided that 0 < x ≤ 2) are more preferable.

Further, as to Li(NiₐCo_{b}Mn_{c})O₂, those satisfying 1/3 ≤ a < 1, 0 < b ≤ 1/3, 0 < c ≤ 1/3, and a + b + c = 1 are still more preferable.

The Li(NiₐCo_{b}Mn_{c})O₂ can also be obtained as a commercially available product, and examples of such a commercially available product include NCM111 (manufactured by Beijing Easping Material Technology, manufactured by Toshima Manufacturing Co., Ltd., a = 1/3, b = 1/3, c = 1/3), NCM523 (Beijing Easping Material Technology, manufactured by JIANGSU Easping Material Technology, a = 0.5, b = 0.2, c = 0.3), NCM622 (manufactured by Beijing Easping Material Technology, a = 0.6, b = 0.2, c = 0.2), NCM811 (manufactured by Beijing Easping Material Technology, a = 0.8, b = 0.1, c = 0.1), and the like.

The compounding amount of the inorganic active material varies depending on required electrical and thermal characteristics, viscosity of the composition, production cost, and the like, but is preferably 80 to 99.8 wt%, more preferably 85 to 98.5 wt%, and still more preferably 90 to 98 wt% in the solid content.

Examples of the conductive additive include carbon materials such as graphite, carbon black, acetylene black, vapor grown carbon fiber, carbon nanotube, carbon nanohorn, and graphene, conductive polymers such as polyaniline, polypyrrole, polythiophene, polyacetylene, and polyacene, and the like. The conductive additive can be used singly or in admixture of two or more kinds thereof.

The compounding amount of the conductive additive is not particularly limited, but is preferably 0.05 to 9 wt%, more preferably 0.1 to 6 wt%, and still more preferably 0.2 to 3 wt% in the solid content. By setting the compounding amount of the conductive additive within the above ranges, good electrical conductivity can be obtained.

The binder can be appropriately selected from known materials and used, and is not particularly limited. Examples of the binder that can be used in the present invention include polyvinylidene fluoride (PVdF), polytetrafluoroethylene, a tetrafluoroethylene-hexafluoropropylene copolymer, a vinylidene fluoride-hexafluoropropylene copolymer, a vinylidene fluoride-chlorinated trifluoroethylene copolymer, polyvinyl alcohol, polyimide, an ethylene-propylene-diene terpolymer, styrene-butadiene rubber, carboxymethyl cellulose, polyacrylic acid, polyaniline, polyvinyl pyrrolidone, tetrafluoroethylene, polyethylene, polypropylene, and the like. These can be used singly or in combination of two or more kinds thereof.

The compounding amount of the binder is not particularly limited, but is preferably 0.14 to 10 wt%, more preferably 0.5 to 7 wt%, and still more preferably 1 to 5 wt% in the solid content. By setting the compounding amount of the binder within the above ranges, good adhesion to a current collecting substrate is obtained without lowering the capacity.

The binder may be dissolved in an appropriate solvent described later in advance before mixing, as necessary.

The solvent is not particularly limited as long as it can disperse or dissolve the raw materials to be used. Examples of such a solvent include those similar to those exemplified in the description of the carbon nanostructure, and more suitable specific examples include water, NMP, dimethyl sulfoxide, ethylene carbonate, propylene carbonate, dimethyl carbonate, diethyl carbonate, methyl ethyl carbonate, γ-butyrolactone, tetrahydrofuran, dioxolane, sulfolane, N,N-dimethylformamide, N,N-dimethylacetamide, and the like. These solvents may be appropriately selected according to the raw materials to be used, but NMP is suitable when a water-insoluble binder such as PVdF is used. The solvents may be used singly or in admixture of two or more kinds thereof.

When the battery material for forming the active material layer is prepared, a preparation method thereof is not particularly limited, and the battery material may be prepared by blending components in any order.

In the carbon nanostructure, when the solvent used in the synthesis is the same as or a solvent miscible with the solvent exemplified above, the obtained reaction solution may be used as it is. On the other hand, when the solvent used for the synthesis of the carbon nanostructures is a solvent that is not miscible with the solvent exemplified above, it is preferable to use a solvent isolated by removing the solvent from the obtained reaction solution or a solvent replaced by an appropriate solvent. In particular, when water is used as a solvent in the synthesis of the carbon nanostructures, it is preferable to replace the solvent by the organic solvent.

Furthermore, in the present invention, a solution or dispersion containing an inorganic active material and a carbon nanostructure is prepared before mixing the above components, and then the solvent is removed, whereby a composite of the inorganic active material-carbon nanostructure can be prepared. By using this composite in the battery material of the present invention, a secondary battery having excellent rate characteristics and cycle characteristics can be obtained.

### [Second invention]

An electrode material according to a second invention is an electrode material containing an organic compound having charge storage capacity and an inorganic active material, and a content of the organic compound is 1 wt% or less in a solid content. In the second invention, by using the organic compound having charge storage capacity in combination with the inorganic active material, a battery having excellent rate characteristics and cycle characteristics can be obtained even when the organic compound is added in a small amount with respect to the compounding amount of the inorganic active material.

In the second invention, the phrase "having charge storage capacity" means to provide a discharge capacity of 10 mAh/g or more in a secondary battery including an electrode using only an organic compound having charge storage capacity as an active material. The discharge capacity is preferably 30 mAh/g or more and more preferably 45 mAh/g or more, from the viewpoint of improving rate characteristics and cycle characteristics. The upper limit is not particularly limited, but is usually 200 mAh/g or less in consideration of degradation during cycles. In the second invention, the discharge capacity is within the above ranges, whereby decrease in the charge capacity is reduced as compared with that in the case of blending a compound having no capacity by itself. The solid content referred to herein means components other than the solvent contained in the electrode material of the present invention.

Examples of the organic compound having charge storage capacity include a triarylamine hyperbranched polymer described in WO 2014/042080 A, a carbazole polymer described in JP 5983631 B1, and a squaric acid derivative.

### [Triarylamine-based hyperbranched polymer]

Specific examples of the triarylamine-based hyperbranched polymer include hyperbranched polymers obtained by condensation polymerization of triarylamines and aldehydes and/or ketones under acidic conditions, represented by following formulas (1) and (2).

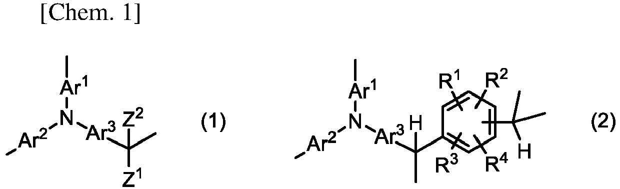

In the above formulas (1) and (2), Ar¹ to Ar³ each independently represent any of divalent organic groups represented by formulas (3) to (7), and a substituted or unsubstituted phenylene group represented by formula (3) is particularly preferable. 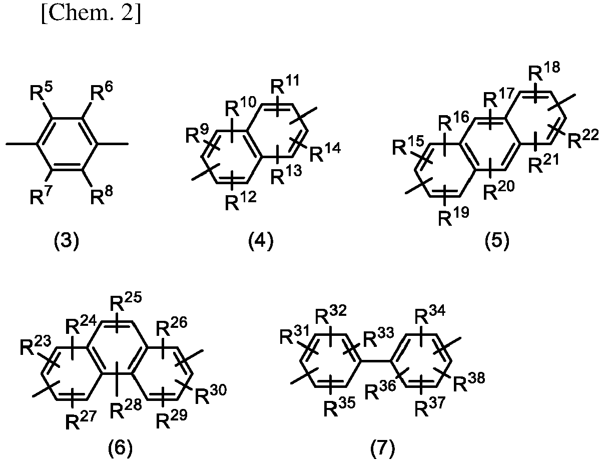 wherein R⁵ to R³⁸ each independently represent a hydrogen atom, a halogen atom, an alkyl group optionally having a branched structure having 1 to 5 carbon atoms, an alkoxy group optionally having a branched structure having 1 to 5 carbon atoms, a carboxy group, a sulfo group, a phosphate group, a phosphonic acid group, or a salt thereof.

In the formulas (1) and (2), Z¹ and Z² each independently represent a hydrogen atom, an alkyl group optionally having a branched structure having 1 to 5 carbon atoms, or any monovalent organic group represented by formulas (8) to (11) (provided that Z¹ and Z² are not the alkyl group at the same time.), and Z¹ and Z² are each independently preferably a hydrogen atom, a 2- or 3-thienyl group, or a group represented by formula (8), particularly, it is more preferable that one of Z¹ and Z² is a hydrogen atom, and the other is a hydrogen atom, a 2- or 3-thienyl group, a group represented by formula (8), particularly, R⁴¹ is a phenyl group, or R⁴¹ is a methoxy group.

In the case where R⁴¹ is a phenyl group, when a method of introducing an acidic group after production of a polymer is used, an acidic group may be introduced onto the phenyl group (see WO 2014/042080 A). 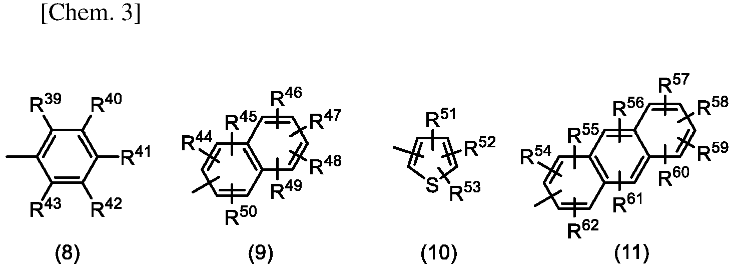 wherein R³⁹ to R⁶² each independently represent a hydrogen atom, a halogen atom, an alkyl group optionally having a branched structure having 1 to 5 carbon atoms, a haloalkyl group optionally having a branched structure having 1 to 5 carbon atoms, a phenyl group, OR⁶³, COR⁶³, NR⁶³R⁶⁴, COOR⁶⁵ (wherein R⁶³ and R⁶⁴ each independently represent a hydrogen atom, an alkyl group optionally having a branched structure having 1 to 5 carbon atoms, a haloalkyl group optionally having a branched structure having 1 to 5 carbon atoms, or a phenyl group, and R⁶⁵ represents an alkyl group optionally having a branched structure having 1 to 5 carbon atoms, a haloalkyl group optionally having a branched structure having 1 to 5 carbon atoms, or a phenyl group.), a carboxy group, a sulfo group, a phosphate group, a phosphonic acid group, or a salt thereof.

In the above formulas (2) to (7), R¹ to R³⁸ each independently represent a hydrogen atom, a halogen atom, an alkyl group optionally having a branched structure having 1 to 5 carbon atoms, an alkoxy group optionally having a branched structure having 1 to 5 carbon atoms, a carboxy group, a sulfo group, a phosphate group, a phosphonic acid group, or a salt thereof.

Here, examples of the halogen atom include fluorine, chlorine, bromine, and iodine atoms.

Examples of the alkyl group optionally having a branched structure having 1 to 5 carbon atoms include a methyl group, an ethyl group, an n-propyl group, an isopropyl group, an n-butyl group, a sec-butyl group, a tert-butyl group, an n-pentyl group, and the like.

Examples of the alkoxy group optionally having a branched structure having 1 to 5 carbon atoms include a methoxy group, an ethoxy group, an n-propoxy group, an isopropoxy group, an n-butoxy group, a sec-butoxy group, a tert-butoxy group, an n-pentoxy group, and the like.

Examples of the salts of a carboxy group, a sulfo group, a phosphate group, and a phosphonic acid group include alkali metal salts such as sodium and potassium; Group 2 metal salts such as magnesium and calcium; ammonium salts; aliphatic amine salts such as propylamine, dimethylamine, triethylamine, and ethylenediamine; alicyclic amine salts such as imidazoline, piperazine, and morpholine; aromatic amine salts such as aniline and diphenylamine; pyridinium salts; and the like.

In the above formulas (8) to (11), R³⁹ to R⁶² each independently represent a hydrogen atom, a halogen atom, an alkyl group optionally having a branched structure having 1 to 5 carbon atoms, a haloalkyl group optionally having a branched structure having 1 to 5 carbon atoms, a phenyl group, OR⁶³, COR⁶³, NR⁶³R⁶⁴, COOR⁶⁵ (wherein R⁶³ and R⁶⁴ each independently represent a hydrogen atom, an alkyl group optionally having a branched structure having 1 to 5 carbon atoms, a haloalkyl group optionally having a branched structure having 1 to 5 carbon atoms, or a phenyl group, and R⁶⁵ represents an alkyl group optionally having a branched structure having 1 to 5 carbon atoms, a haloalkyl group optionally having a branched structure having 1 to 5 carbon atoms, or a phenyl group.), or a carboxy group, a sulfo group, a phosphate group, a phosphonic acid group, or a salt thereof.

Here, examples of the haloalkyl group optionally having a branched structure having 1 to 5 carbon atoms include a difluoromethyl group, a trifluoromethyl group, a bromodifluoromethyl group, a 2-chloroethyl group, a 2-bromoethyl group, a 1,1-difluoroethyl group, a 2,2,2-trifluoroethyl group, a 1,1,2,2-tetrafluoroethyl group, a 2-chloro-1,1,2-trifluoroethyl group, a pentafluoroethyl group, a 3-bromopropyl group, a 2,2,3,3-tetrafluoropropyl group, a 1,1,2,3,3,3-hexafluoropropyl group, a 1,1,1,3,3,3-hexafluoropropan-2-yl group, a 3-bromo-2-methylpropyl group, a 4-bromobutyl group, a perfluoropentyl group, and the like.

Examples of the halogen atom and the alkyl group optionally having a branched structure having 1 to 5 carbon atoms include the same groups as those exemplified in the above formulas (2) to (7).

Suitable specific examples of the hyperbranched polymer include, but are not limited to, those represented by the following formulas.

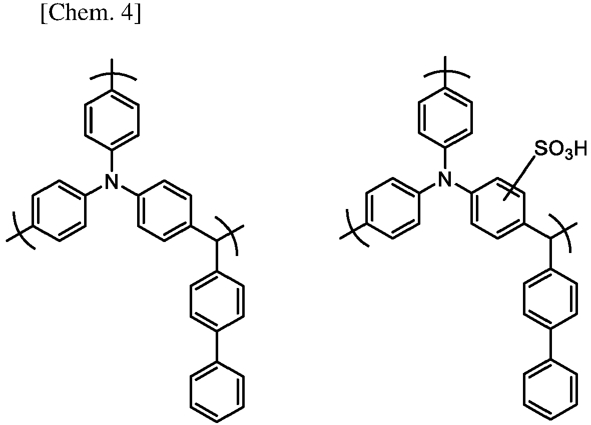

The average molecular weight of the hyperbranched polymer is not particularly limited, but weight average molecular weight Mw is preferably 1,000 to 2,000,000, and more preferably 2,000 to 1,000,000. In the present invention, Mw is a value in terms of polystyrene measured by gel permeation chromatography (GPC) (the same applies hereinafter).

The hyperbranched polymer can be synthesized according to the method described in WO 2014/042080 A. Specifically, as shown in the following Scheme 1, the hyperbranched polymer is obtained by condensation polymerization of, for example, a triarylamine compound capable of providing the above-described triarylamine skeleton as represented by the following formula (A), and, for example, an aldehyde compound and/or ketone compound as represented by the following formula (B), in the presence of an acid catalyst.

When a difunctional compound (C) such as phthalaldehydes such as terephthalaldehyde is used as the aldehyde compound, not only the reaction shown in the Scheme 1 but also the reaction shown in the following Scheme 2 may occur to obtain a hyperbranched polymer having a crosslinked structure in which both two functional groups contribute to the condensation reaction. 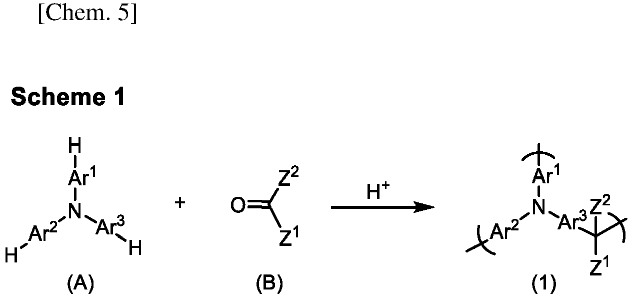 wherein Ar¹ to Ar³ and Z¹ to Z² represent the same meaning as described above. 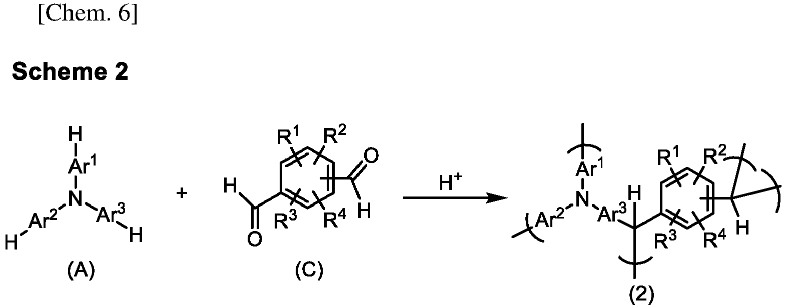 wherein Ar¹ to Ar³ and R¹ to R⁴ represent the same meaning as described above.

In the synthesis of the hyperbranched polymer, with reference to the description of WO 2014/042080 A, the type, compounding amount, synthesis conditions, and the like of raw materials to be used may be appropriately selected and adjusted to synthesize a polymer having a target structure and molecular weight.

### [Carbazole polymer]

Specific examples of the carbazole polymer include a polymer containing a repeating unit represented by formula (1a).

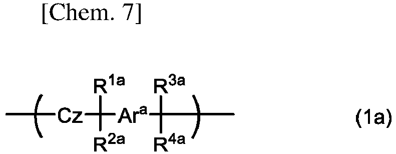

In the formula, R^{1a} to R^{4a} each independently represent an alkyl group having 1 to 60 carbon atoms, a haloalkyl group having 1 to 60 carbon atoms, a cycloalkyl group having 3 to 60 carbon atoms, a bicycloalkyl group having 4 to 60 carbon atoms, an alkenyl group having 2 to 60 carbon atoms, an alkynyl group having 2 to 60 carbon atoms, an aromatic group having 6 to 60 carbon atoms, or a heteroaromatic group having 2 to 60 carbon atoms. These alkyl groups, haloalkyl groups, cycloalkyl groups, bicycloalkyl groups, alkenyl groups, alkynyl groups, aromatic groups and heteroaromatic groups may be substituted with Z.

In the formula, Cz represents a divalent group containing a carbazole skeleton represented by formula (2a).

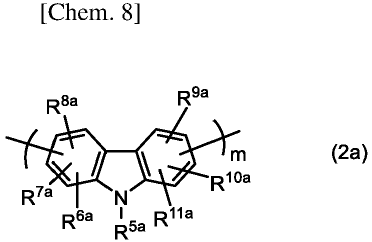

In the formula, R^{5a} represents a hydrogen atom, an alkyl group having 1 to 60 carbon atoms, a haloalkyl group having 1 to 60 carbon atoms, a cycloalkyl group having 3 to 60 carbon atoms, a bicycloalkyl group having 4 to 60 carbon atoms, an alkenyl group having 2 to 60 carbon atoms, an alkynyl group having 2 to 60 carbon atoms, an aromatic group having 6 to 60 carbon atoms, or a heteroaromatic group having 2 to 60 carbon atoms. These alkyl groups, haloalkyl groups, cycloalkyl groups, bicycloalkyl groups, alkenyl groups, alkynyl groups, aromatic groups and heteroaromatic groups may be substituted with Z, and the alkyl groups and haloalkyl groups may contain an ether structure.

R^{6a} to R^{11a} each independently represent a hydrogen atom, a halogen atom, a nitro group, a cyano group, an amino group, a hydroxyl group, a thiol group, a phosphoric acid group, a sulfonic acid group, a carboxy group, an alkoxy group having 1 to 60 carbon atoms, a thioalkoxy group having 1 to 60 carbon atoms, an alkyl group having 1 to 60 carbon atoms, a haloalkyl group having 1 to 60 carbon atoms, a cycloalkyl group having 3 to 60 carbon atoms, a bicycloalkyl group having 4 to 60 carbon atoms, an alkenyl group having 2 to 60 carbon atoms, an alkynyl group having 2 to 60 carbon atoms, an acyl group having 1 to 60 carbon atoms, an aromatic group having 6 to 60 carbon atoms, or a heteroaromatic group having 2 to 60 carbon atoms. These alkoxy groups, thioalkoxy groups, alkyl groups, haloalkyl groups, cycloalkyl groups, bicycloalkyl groups, alkenyl groups, alkynyl groups, acyl, aromatic groups and heteroaromatic groups may be substituted with Z.

m represents an integer of 1 to 10.

Ar^{a} represents a divalent aromatic ring or heteroaromatic ring. These aromatic ring and heteroaromatic ring may be substituted with Z. Z represents a halogen atom, a nitro group, a cyano group, an amino group, a hydroxyl group, a thiol group, a phosphoric acid group, a sulfonic acid group, a carboxy group, an alkoxy group having 1 to 60 carbon atoms, a thioalkoxy group having 1 to 60 carbon atoms, an alkyl group having 1 to 60 carbon atoms, a haloalkyl group having 1 to 60 carbon atoms, a cycloalkyl group having 3 to 60 carbon atoms, a bicycloalkyl group having 4 to 60 carbon atoms, an alkenyl group having 2 to 60 carbon atoms, an alkynyl group having 2 to 60 carbon atoms, an acyl group having 1 to 60 carbon atoms, an aromatic group having 6 to 60 carbon atoms, or a heteroaromatic group having 2 to 60 carbon atoms.

In the carbazole polymer, a carbon atom bonded to the carbazole skeleton needs to be a quaternary carbon in order to exhibit high stability of the oxidation state, and in the formula (1a), all of R^{1a} to R^{4a} are not hydrogen atoms, and each independently represents an alkyl group having 1 to 60 carbon atoms, a haloalkyl group having 1 to 60 carbon atoms, a cycloalkyl group having 3 to 60 carbon atoms, a bicycloalkyl group having 4 to 60 carbon atoms, an alkenyl group having 2 to 60 carbon atoms, an alkynyl group having 2 to 60 carbon atoms, an aromatic group having 6 to 60 carbon atoms, or a heteroaromatic group having 2 to 60 carbon atoms.

Specific examples of the alkyl group having 1 to 60 carbon atoms may be linear or branched, and examples thereof include a methyl group, an ethyl group, an n-propyl group, an i-propyl group, an n-butyl group, an i-butyl group, a s-butyl group, a t-butyl group, an n-pentyl group, a 1-methyl-n-butyl group, a 2-methyl-n-butyl group, a 3-methyl-n-butyl group, a 1,1-dimethyl-n-propyl group, an n-hexyl group, a 1-methyl-n-pentyl group, a 2-methyl-n-pentyl group, a 1,1-dimethyl-n-butyl group, a 1-ethyl-n-butyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, an n-eicosyl group, an n-heneicosyl group, an n-docosyl group, an n-tricosyl group, an n-tetracosyl group, an n-pentacosyl group, an n-hexacosyl group, an n-heptacosyl group, an n-octacosyl group, an n-nonacosyl group, an n-triacontyl group, and the like.

Examples of the haloalkyl group having 1 to 60 carbon atoms include those obtained by substituting at least one hydrogen atom of the alkyl group having 1 to 60 carbon atoms with a halogen atom, and examples of the halogen atom include fluorine, chlorine, bromine, and an iodine atom.

Specific examples of the haloalkyl group include a monofluoromethyl group, a difluoromethyl group, a trifluoromethyl group, a bromodifluoromethyl group, a 2-chloroethyl group, a 2-bromoethyl group, a 1,1-difluoroethyl group, a 2,2,2-trifluoroethyl group, a 1,1,2,2-tetrafluoroethyl group, a 2-chloro-1, 1,2-trifluoroethyl group, a pentafluoroethyl group, a 3-bromopropyl group, a 2,2,3,3-tetrafluoropropyl group, a 1,1,2,3,3,3-hexafluoropropyl group, a 1,1,1,3,3,3-hexafluoropropan-2-yl group, a 3-bromo-2-methylpropyl group, a 4-bromobutyl group, a perfluoropentyl group, and the like.

Specific examples of the cycloalkyl group having 3 to 60 carbon atoms include a cyclopropyl group, a cyclobutyl group, a cyclopentyl group, a cyclohexyl group, a cycloheptyl group, a cyclooctyl group, a cyclononyl group, a cyclodecyl group, a cycloundecyl group, and the like.

Specific examples of the bicycloalkyl group having 4 to 60 carbon atoms include a bicyclobutyl group, a bicyclopentyl group, a bicyclohexyl group, a bicycloheptyl group, a bicyclooctyl group, a bicyclononyl group, a bicyclodecyl group, and the like.

Specific examples of the alkenyl group having 2 to 20 carbon atoms may be linear or branched, and examples thereof include an ethenyl group, an n-1-propenyl group, an n-2-propenyl group, a 1-methylethenyl group, an n-1-butenyl group, an n-2-butenyl group, an n-3-butenyl group, a 2-methyl-1-propenyl group, a 2-methyl-2-propenyl group, a 1-ethylethenyl group, a 1-methyl-1-propenyl group, a 1-methyl-2-propenyl group, an n-1-pentenyl group, an n-2-pentenyl group, an n-3-pentenyl group, an n-4-pentenyl group, a 1-n-propylethenyl group, a 1-methyl-1-butenyl group, a 1-methyl-2-butenyl group, a 1-methyl-3-butenyl group, a 2-ethyl-2-propenyl group, a 2-methyl-1-butenyl group, a 2-methyl-2-butenyl group, a 2-methyl-3-butenyl group, a 3-methyl-1-butenyl group, a 3-methyl-2-butenyl group, a 3-methyl-3-butenyl group, a 1,1-dimethyl-2-propenyl group, a 1-i-propylethenyl group, a 1,2-dimethyl-1-propenyl group, a 1,2-dimethyl-2-propenyl group, an n-1-hexenyl group, an n-2-hexenyl group, an n-3-hexenyl group, an n-4-hexenyl group, an n-5-hexenyl group, an n-heptenyl group, an n-octenyl group, an n-nonenyl group, an n-decenyl group, an n-undecenyl group, an n-dodecenyl group, an n-tetradecenyl group, an n-pentadecenyl group, an n-hexadecenyl group, an n-heptadecenyl group, an n-octadecenyl group, an n-nonadecenyl group, an n-eicosenyl group, an n-heneicosenyl group, an n-docosenyl group, an n-tricosenyl group, an n-tetracosenyl group, an n-pentacosenyl group, an n-hexacosenyl group, an n-heptacosenyl group, an n-octacosenyl group, an n-nonacosenyl group, an n-triancotenyl group, and the like.

Specific examples of the alkynyl group having 2 to 60 carbon atoms may be linear or branched, and examples thereof include an ethynyl group, an n-1-propynyl group, an n-2-propynyl group, an n-1-butynyl group, an n-2-butynyl group, an n-3-butynyl group, a 1-methyl-2 propynyl group, an n-1-pentynyl group, an n-2-pentynyl group, an n-3-pentynyl group, an n-4-pentynyl group, a 1-methyl-n-butynyl group, a 2-methyl-n-butynyl group, a 3-methyl-n-butynyl group, a 1,1-dimethyl-n-propynyl group, an n-1-hexynyl group, an n-2-hexynyl group, an n-3-hexynyl group, an n-4-hexynyl group, an n-5-hexynyl group, a 1-methyl-n-pentynyl group, a 2-methyl-n-pentynyl group, a 1,1-dimethyl-n-butynyl group, a 1-ethyl-n-butynyl group, a 1,1,2-trimethyl-n-propynyl group, an n-heptynyl group, an n-octynyl group, an n-nonynyl group, an n-decynyl group, an n-undecynyl group, an n-dodecynyl group, an n-tridecynyl group, an n-tetradecynyl group, an n-pentadecynyl group, an n-hexadecynyl group, an n-heptadecynyl group, an n-octadecynyl group, an n-nonadecynyl group, an n-eicosynyl group, and the like.

Specific examples of the aromatic group having 6 to 60 carbon atoms include phenyl, α-naphthyl, β-naphthyl, o-biphenylyl, m-biphenylyl, p-biphenylyl, anthracenyl, phenanthryl, fluorenyl, p-terphenyl, m-terphenyl, tetracenyl, pentacenyl, perylenyl groups, and the like.

Specific examples of the heteroaromatic group having 2 to 60 carbon atoms include a 2- or 3-thienyl group, a 2- or 3-furyl group, a 2-, 4- or 5-oxazolyl group, a 2-, 4- or 5-thiazolyl group, a 2- or 4-imidazolyl group, a 2-, 3- or 4-pyridyl group, a 2-, 4- or 5-pyrimidinyl group, a 2-pyrazinyl group, a 3- or 4-pyridazinyl group, a 2- or 3-pyrazyl group, a 2-, 3-, 4-, 5-, 6-, 7- or 8-quinolyl group, a 2-, 5- or 6-quinoxalyl group, a 2-, 4-, 5-, 6- or 7-benzoxazolyl group, a 2-, 4-, 5-, 6- or 7-benzothiazolyl group, a 2-, 4- or 5-benzimidazolyl group, and the like.

In each of these alkyl groups, haloalkyl groups, cycloalkyl groups, bicycloalkyl groups, alkenyl groups, alkynyl groups, aromatic groups and heteroaromatic groups may be substituted with Z, one or more hydrogen atoms therein may be substituted with a substituent Z such as a halogen atom, a nitro group, a cyano group, an amino group, a hydroxyl group, a thiol group, a phosphoric acid group, a sulfonic acid group, a carboxy group, an alkoxy group having 1 to 60 carbon atoms, a thioalkoxy group having 1 to 60 carbon atoms, an alkyl group having 1 to 60 carbon atoms, a haloalkyl group having 1 to 60 carbon atoms, a cycloalkyl group having 3 to 60 carbon atoms, a bicycloalkyl group having 4 to 60 carbon atoms, an alkenyl group having 2 to 60 carbon atoms, an alkynyl group having 2 to 60 carbon atoms, an acyl group having 1 to 60 carbon atoms, an aromatic group having 6 to 60 carbon atoms, or a heteroaromatic group having 2 to 60 carbon atoms.

As a specific example of the alkoxy group having 1 to 60 carbon atoms, the alkyl group in the alkoxy group may be linear, branched, or cyclic, and examples thereof include a methoxy group, an ethoxy group, an n-propoxy group, an i-propoxy group, a c-propoxy group, an n-butoxy group, an i-butoxy group, an s-butoxy group, a t-butoxy group, a c-butoxy group, an n-pentoxy group, a c-pentoxy group, an n-hexoxy group, a c-hexoxy group, an n-heptyloxy group, an n-octyloxy group, an n-nonyloxy group, an n-decyloxy group, an n-undecyloxy group, an n-dodecyloxy group, an n-tridecyloxy group, an n-tetradecyloxy group, an n-pentadecyloxy group, an n-hexadecyloxy group, an n-heptadecyloxy group, an n-octadecyloxy group, an n-nonadecyloxy group, an n-eicosyloxy group, an n-heneicosyloxy group, an n-docosyloxy group, an n-tricosyloxy group, an n-tetracosyloxy group, an n-pentacosyloxy group, an n-hexacosyloxy group, an n-heptacosyloxy group, an n-octacosyloxy group, an n-nonacosyloxy group, an n-triacontyloxy group, and the like.

Specific examples of the thioalkoxy group having 1 to 60 carbon atoms include a group in which an oxygen atom in the alkoxy group is substituted with a sulfur atom.

Examples of the acyl group having 1 to 60 carbon atoms include a formyl group, an acetyl group, a propionyl group, a butyryl group, an i-butyryl group, a valeryl group, an i-valeryl group, a pivaloyl group, a caproyl group, an enantiyl group, a caprylyl group, a pelargonyl group, a capryl group, and the like.

Examples of other halogen atoms, alkyl groups, haloalkyl groups, cycloalkyl groups, bicycloalkyl groups, alkenyl groups, alkynyl groups, aromatic groups, and heteroaromatic groups include the same groups as described above.

Among them, in consideration of further enhancing solubility of the resulting carbazole polymer, as R^{1a} to R^{4a}, an alkyl group having 1 to 10 carbon atoms and a haloalkyl group having 1 to 10 carbon atoms are preferable, an alkyl group having 1 to 10 carbon atoms is more preferable, and particularly, a linear alkyl group having 1 to 10 carbon atoms, that is, a methyl group, an ethyl group, an n-propyl group, an n-butyl group, an n-pentyl group, and the like are preferable.

In the formula (1a), Cz represents a divalent group containing the carbazole skeleton represented by formula (2a).

In the formula (2a), R^{5a} represents a hydrogen atom, an alkyl group having 1 to 60 carbon atoms, a haloalkyl group having 1 to 60 carbon atoms, a cycloalkyl group having 3 to 60 carbon atoms, a bicycloalkyl group having 4 to 60 carbon atoms, an alkenyl group having 2 to 60 carbon atoms, an alkynyl group having 2 to 60 carbon atoms, an aromatic group having 6 to 60 carbon atoms, or a heteroaromatic group having 2 to 60 carbon atoms, and specific examples of these groups include the same groups as those exemplified above for R¹ to R⁴.

In these alkyl groups, haloalkyl groups, cycloalkyl groups, bicycloalkyl groups, alkenyl groups, alkynyl groups, aromatic groups and heteroaromatic groups, one or more hydrogen atoms therein may be substituted with the above-described substituent Z, and the alkyl groups, haloalkyl groups, cycloalkyl groups, bicycloalkyl groups, alkenyl groups and alkynyl groups may contain an ether structure.

In the present invention, specific examples of the alkyl group containing an ether bond include CH₂OCH₃, CH₂OH₂CH₃, CH₂O(CH₂)₂CH₃, H₂OCH(CH₃)₂, CH₂O(CH₂)₃CH₃, CH₂OCH₂CH(CH₃)₂, CH₂OC(CH₃)₃, CH₂O(CH₂)₄CH₃, CH₂OCH(CH₃)(CH₂)₂CH₃, CH₂O(CH₂)₂CH(CH₃)₂, CH₂OCH(CH₃)(CH₂)₃CH₃, CH₂O(CH₂)₅CH₃, CH₂OCH₂CH(CH₃)(CH₂)₂CH₃, CH₂O(CH₂)₂CH(CH₃)CH₂CH₃, CH₂O(CH₂)₃CH(CH₃)₂, CH₂OC(CH₃)₂(CH₂)₂CH₃, CH₂OCH(CH₂CH₃)(CH₂)₂CH₃, CH₂OC(CH₃)₂CH(CH₃)₂, CH₂O(CH₂)₆CH₃, CH₂O(CH₂)₇CH₃, CH₂OCH₂CH(CH₂CH₃)(CH₂)₃CH₃, CH₂O(CH₂)₈CH₃, CH₂O(CH₂)₉CH₃, CH₂O(CH₂)₁₀CH₃, CH₂O(CH₂)₁₁CH₃, CH₂O(CH₂)₁₂CH₃, CH₂O(CH₂)₁₃CH₃, CH₂O(CH₂)₁₄CH₃, CH₂O(CH₂)₁₅CH₃, CH₂O(CH₂)₁₆CH₃, CH₂O(CH₂)₁₇CH₃, CH₂O(CH₂)₁₈CH₃, CH₂CH₂OCH₃, CH₂CH₂OCH₂CH₃, CH₂CH₂O(CH₂)₂CH₃, CH₂CH₂OCH(CH₃)₂, CH₂CH₂O(CH₂)₃CH₃, CH₂CH₂OCH₂CH(CH₃)₂, CH₂CH₂OC(CH₃)₃, CH₂CH₂O(CH₂)₄CH₃, CH₂CH₂OCH(CH₃)(CH₂)₂CH₃, CH₂CH₂OCH₂CH(CH₃)₂, CH₂CH₂O(CH₂)₂CH(CH₃)₂, CH₂CH₂OC(CH₃)₃, CH₂CH₂OCH(CH₃)(CH₂)₃CH₃, CH₂CH₂O(CH₂)₅CH₃, CH₂CH₂OCH(CH₃)(CH₂)₃CH₃, CH₂CH₂OCH₂CH(CH₃)(CH₂)₂CH₃, CH₂CH₂O(CH₂)₂CH(CH₃)CH₂CH₃, CH₂CH₂O(CH₂)₃CH(CH₃)₂, CH₂CH₂OC(CH₃)₂(CH₂)₂CH₃, CH₂CH₂OCH(CH₂CH₃)(CH₂)₂CH₃, CH₂CH₂OC(CH₃)₂CH(CH₃)₂, CH₂CH₂O(CH₂)₆CH₃, CH₂CH₂O(CH₂)₇CH₃, CH₂CH₂OCH₂CH(CH₂CH₃)(CH₂)₃CH₃, CH₂CH₂O(CH₂)₈CH₃, CH₂CH₂O(CH₂)₉CH₃, CH₂CH₂O(CH₂)₁₀CH₃, CH₂CH₂O(CH₂)₁₁CH₃, CH₂CH₂O(CH₂)₁₂CH₃, CH₂CH₂O(CH₂)₁₃CH₃, CH₂CH₂O(CH₂)₁₄CH₃, CH₂CH₂O(CH₂)₁₅CH₃, CH₂CH₂O(CH₂)₁₆CH₃, CH₂CH₂O(CH₂)₁₇CH₃, CH₂CH₂CH₂OCH₃, CH₂CH₂CH₂OCH₂CH₃, CH₂CH₂CH₂O(CH₂)₂CH₃, CH₂CH₂CH₂OCH(CH₃)₂, CH₂CH₂CH₂O(CH₂)₃CH₃, CH₂CH₂CH₂OCH₂CH(CH₃)₂, CH₂CH₂CH₂OC(CH₃)₃, CH₂CH₂CH₂O(CH₂)₄CH₃, CH₂CH₂CH₂OCH(CH₃)(CH₂)₂CH₃, CH₂CH₂CH₂OCH₂CH(CH₃)₂, CH₂CH₂CH₂O(CH₂)₂CH(CH₃)₂, CH₂CH₂CH₂OC(CH₃)₃, CH₂CH₂CH₂OCH(CH₃)(CH₂)₃CH₃, CH₂CH₂CH₂O(CH₂)₅CH₃, CH₂CH₂CH₂OCH(CH₃)(CH₂)₃CH₃, CH₂CH₂CH₂OCH₂CH(CH₃)(CH₂)₂CH₃, CH₂CH₂CH₂O(CH₂)₂CH(CH₃)CH₂CH₃, CH₂CH₂CH₂O(CH₂)₃CH(CH₃)₂, CH₂CH₂CH₂OC(CH₃)₂(CH₂)₂CH₃, CH₂CH₂CH₂OCH(CH₂CH₃)(CH₂)₂CH₃, CH₂CH₂CH₂OC(CH₃)₂CH(CH₃)₂, CH₂CH₂CH₂O(CH₂)₆CH₃, CH₂CH₂CH₂O(CH₂)₇CH₃, CH₂CH₂CH₂OCH₂CH(CH₂CH₃)(CH₂)₃CH₃, CH₂CH₂CH₂O(CH₂)₈CH₃, CH₂CH₂CH₂O(CH₂)₉CH₃, CH₂CH₂CH₂O(CH₂)₁₀CH₃, CH₂CH₂CH₂O(CH₂)₁₁CH₃, CH₂CH₂CH₂O(CH₂)₁₂CH₃, CH₂CH₂CH₂O(CH₂)₁₃CH₃, CH₂CH₂CH₂O(CH₂)₁₄CH₃, CH₂CH₂CH₂O(CH₂)₁₅CH₃, CH₂CH₂CH₂O(CH₂)₁₆CH₃, CH₂CH₂OCH₂CH₂OCH₃, CH₂CH₂OCH₂CH₂OCH₂CH₂OCH₃, CH₂CH₂OCH₂CH₂OCH₂CH₂OCH₂CH₂OCH₃, CH₂CH₂OCH₂CH₂OCH₂CH₂OCH₂CH₂OCH₂CH₂OCH₃, CH₂CH₂OCH₂CH₂OCH₂CH₂OCH₂CH₂OCH₂CH₂OCH₂CH₂OCH₃, CH₂CH₂OCH₂CH₂OCH₂CH₂OCH₂CH₂OCH₂CH₂OCH₂CH₂OCH₂CH₂OCH₃, CH₂CH₂OCH₂CH₂OCH₂CH₂OCH₂CH₂OCH₂CH₂OCH₂CH₂OCH₂CH₂OCH₂CH₂OCH₃, CH₂CH₂CH₂OCH₂CH₂CH₂OCH₃, CH₂CH₂CH₂OCH₂CH₂CH₂OCH₂CH₂CH₂OCH₃, CH₂CH₂CH₂OCH₂CH₂CH₂OCH₂CH₂CH₂OCH₂CH₂CH₂OCH₃, CH₂CH₂CH₂OCH₂CH₂CH₂OCH₂CH₂CH₂OCH₂CH₂CH₂OCH₂CH₂CH₂OCH₃, CH₂CH₂CH₂OCH₂CH₂CH₂OCH₂CH₂CH₂OCH₂CH₂CH₂OCH₂CH₂CH₂OCH₂CH₂CH₂OCH₃, CH₂CH₂CH₂CH₂OCH₂CH₂CH₂CH₂OCH₂CH₂CH₂CH₂OCH₃, CH₂CH₂CH₂CH₂OCH₂CH₂CH₂CH₂OCH₂CH₂CH₂CH₂OCH₂CH₂CH₂CH₂OCH₃, CH₂CH₂OCH₂CH₂OCH₂CH₂OCH₂CH₂OCH₂CH₂OCH₂CH₂OCH₂CH₃, CH₂CH₂OCH₂CH₂OCH₂CH₂OCH₂CH₂OCH₂CH₂OCH₂CH₂OCH₂CH₂OCH₂CH₃, CH₂CH₂OCH₂CH₂OCH₂CH₂OCH₂CH₂OCH₂CH₂OCH₂CH₂OCH₂CH₂OCH₂CH₂OCH₂CH₃, CH₂O(CH₂)₁₉CH₃, CH₂CH₂O(CH₂)₁₈CH₃, CH₂CH₂O(CH₂)₁₉CH₃, CH₂CH₂CH₂O(CH₂)₁₇CH₃, CH₂CH₂CH₂O(CH₂)₁₈CH₃, CH₂CH₂CH₂O(CH₂)₁₉CH₃, CH₂CH₂CH₂OCH₂CH₂CH₂OCH₂CH₂CH₂OCH₂CH₂CH₂OCH₂CH₂CH₂OCH₂CH₂CH₂OCH₂ CH₂CH₂OCH₃, CH₂CH₂CH₂OCH₂CH₂CH₂OCH₂CH₂CH₂OCH₂CH₂CH₂OCH₂CH₂CH₂OCH₂CH₂CH₂OCH₂ CH₂CH₂OCH₂CH₂CH₂OCH₃, CH₂CH₂CH₂CH₂OCH₂CH₂CH₂CH₂OCH₂CH₂CH₂CH₂OCH₂CH₂CH₂CH₂OCH₂CH₂CH₂CH₂ OCH₃, CH₂CH₂CH₂CH₂OCH₂CH₂CH₂CH₂OCH₂CH₂CH₂CH₂OCH₂CH₂CH₂CH₂OCH₂CH₂CH₂CH₂ OCH₂CH₂CH₂CH₂OCH₃, CH₂CH₂CH₂CH₂OCH₂CH₂CH₂CH₂OCH₂CH₂CH₂CH₂OCH₂CH₂CH₂CH₂OCH₂CH₂CH₂CH₂ OCH₂CH₂CH₂CH₂OCH₂CH₂CH₂CH₂OCH₃, CH₂CH₂OCH₂CH₂OCH₂CH₃, CH₂CH₂OCH₂CH₂OCH₂CH₂OCH₂CH₃ groups, and the like.

In addition, specific examples of the haloalkyl group containing an ether bond include haloalkyl groups in which at least one of hydrogen atoms of the alkyl group is substituted with a halogen atom.

Among them, in consideration of further enhancing the solubility of the resulting carbazole polymer, R^{5a} is preferably a hydrogen atom, an alkyl group having 1 to 10 carbon atoms, a haloalkyl group having 1 to 10 carbon atoms, or a group represented by formula (4a), and more preferably an alkyl group having 1 to 10 carbon atoms or a group represented by formula (4a'). 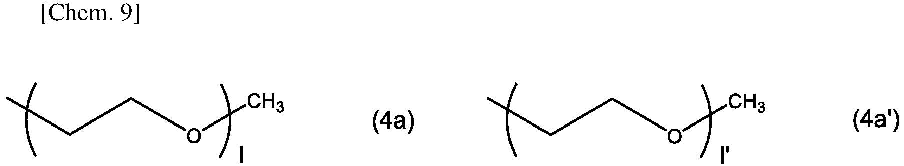 wherein 1 is an integer of 1 to 10, and l' is an integer of 1 to 5.

In the formula (2a), R^{6a} to R^{11a} each independently represent a hydrogen atom, a halogen atom, a nitro group, a cyano group, an amino group, a hydroxyl group, a thiol group, a phosphoric acid group, a sulfonic acid group, a carboxy group, an alkoxy group having 1 to 60 carbon atoms, a thioalkoxy group having 1 to 60 carbon atoms, an alkyl group having 1 to 60 carbon atoms, a haloalkyl group having 1 to 60 carbon atoms, a cycloalkyl group having 3 to 60 carbon atoms, a bicycloalkyl group having 4 to 60 carbon atoms, an alkenyl group having 2 to 60 carbon atoms, an alkynyl group having 2 to 60 carbon atoms, an acyl group having 1 to 60 carbon atoms, an aromatic group having 6 to 60 carbon atoms, or a heteroaromatic group having 2 to 60 carbon atoms, and specific examples of these groups include the same groups as those exemplified above for R¹ to R⁴ and the substituent Z.

In addition, in the alkoxy groups, thioalkoxy groups, alkyl, haloalkyl groups, cycloalkyl groups, bicycloalkyl groups, alkenyl groups, alkynyl groups, acyl groups, aromatic groups and heteroaromatic groups, one or more hydrogen atoms therein may be substituted with the above-described substituent Z.

Among them, R^{6a} to R^{11a} are preferably a hydrogen atom, a halogen atom, an alkyl group having 1 to 10 carbon atoms, a haloalkyl group having 1 to 10 carbon atoms, or an alkoxy group having 1 to 10 carbon atoms, and more preferably a hydrogen atom, a linear alkyl group having 1 to 10 carbon atoms, or an alkoxy group having a linear alkyl group having 1 to 10 carbon atoms, in consideration of balance between improvement of stability of the resulting carbazole polymer and polymerization reactivity of monomer (increase in molecular weight of the resulting polymer) in polymer synthesis.

Also, in the formula (2a), m represents an integer of 1 to 10, and preferably an integer of 1 to 3.

In the formula (2a), a substitution site of quaternary carbon atom on the carbazole skeleton is arbitrary, but a structure represented by formula (3a) in which the quaternary carbon atom is bonded to each nitrogen atom of a carbazole ring at p-position is more preferable. 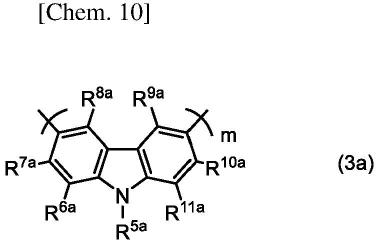 wherein R^{5a} to R^{11a} and m are as defined above.

Also, in the formula (1a), Ar^{a} represents a divalent aromatic ring or heteroaromatic ring.

Specific examples of the divalent aromatic ring include a 1,2-phenylene group, a 1,3-phenylene group, a 1,4-phenylene group, a 1,6-naphthylene group, a 1,7-naphthylene group, a 2,6-naphthylene group, a 2,7-naphthylene group, and the like.

Specific examples of the divalent heteroaromatic ring include divalent imidazole ring, pyridine ring, pyrimidine ring, indole ring, quinoline ring, furan ring, thiophene ring, and the like.

In the aromatic ring and the heteroaromatic ring, one or more hydrogen atoms therein may be substituted with the above-described substituent Z.

Among them, Ara is preferably a divalent group represented by formulas (5a) to (7a), and more preferably a divalent group represented by formulas (5a) and (6a).

In the formulas (5a) to (7a), R^{12a} to R^{23a} each independently represent a hydrogen atom, a halogen atom, an alkyl group having 1 to 10 carbon atoms, a haloalkyl group having 1 to 10 carbon atoms, or an alkoxy group having 1 to 10 carbon atoms, and specific examples thereof include the same groups as the groups having 1 to 10 carbon atoms among the alkyl groups, haloalkyl groups, and alkoxy groups exemplified above, and a hydrogen atom is particularly preferable.

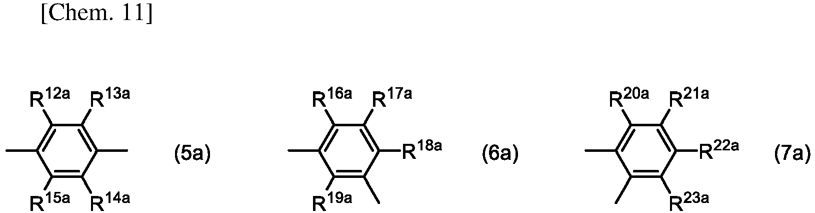

In the present invention, suitable carbazole polymers include, but are not limited to, those represented by the following formulas (8a) and (9a). 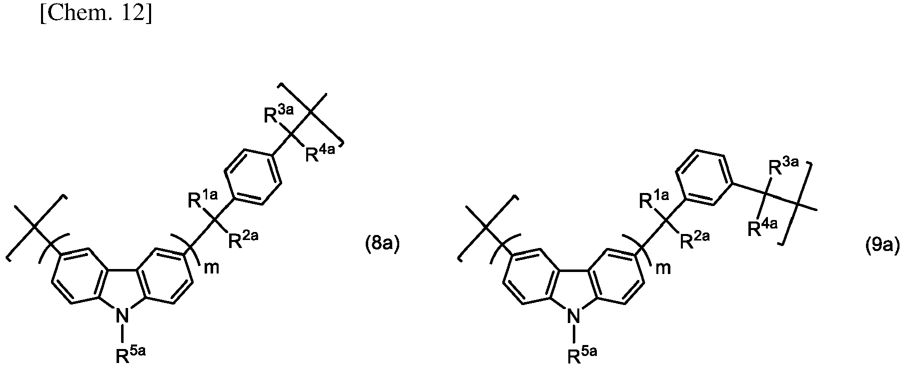 wherein R^{1a} to R^{5a} and m are as defined above.

Suitable specific examples of the carbazole polymer include, but are not limited to, those represented by the following formulas.

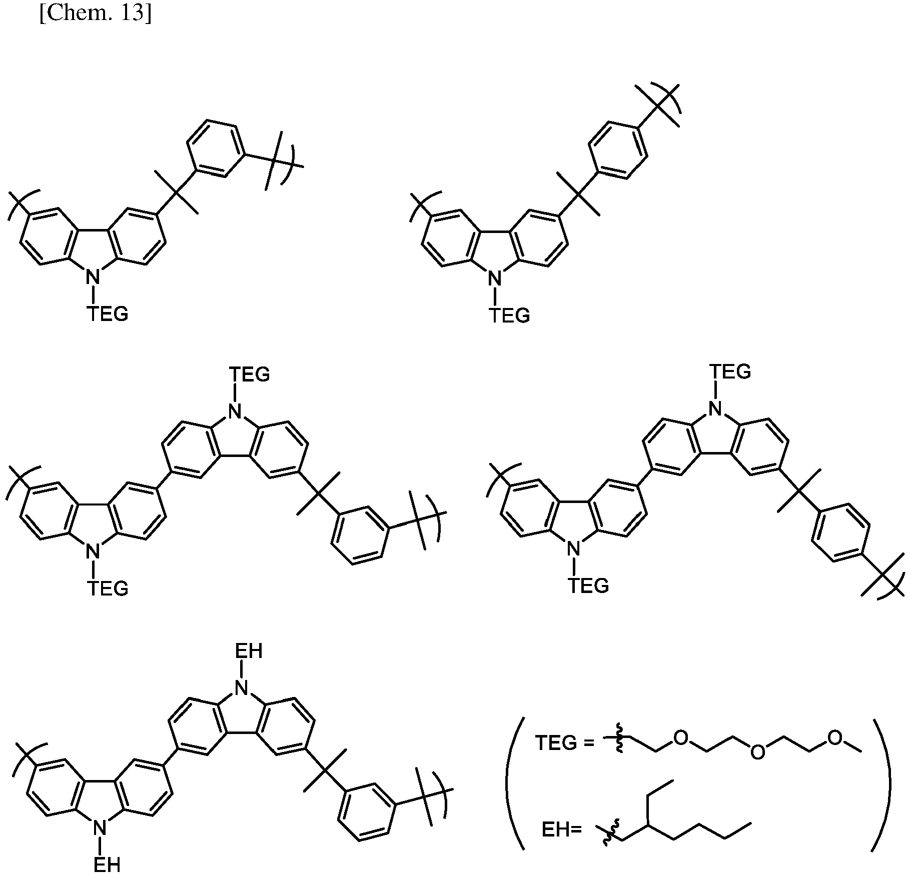

In the present invention, Mw of the carbazole polymer is not particularly limited, but is preferably 500 to 500,000, more preferably 2,000 to 300,000, and still more preferably 5,000 to 200,000.

The carbazole polymer can be synthesized according to a method described in JP 5983631 B2, and can be produced by, for example, polymerizing a carbazole derivative represented by formula (10a) and a bis-alcohol compound represented by formula (11a), in the presence of an acid catalyst. 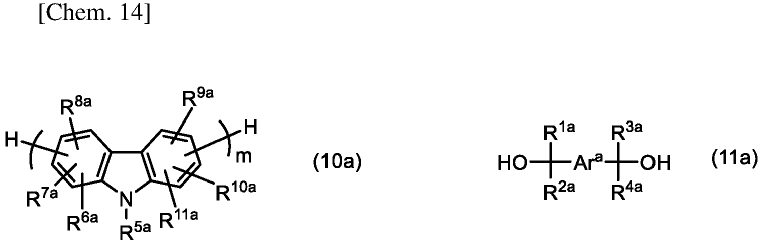 wherein R^{1a} to R^{11a}, Ar^{a} and m are as defined above.

In the synthesis of the carbazole polymer, with reference to the description of JP 5983631 B2, the type, compounding amount, synthesis conditions, and the like of raw materials to be used may be appropriately selected and adjusted to synthesize a polymer having a target structure and molecular weight.

### [Squaric acid derivative]

Specific examples of the squaric acid derivative include those represented by formulas (1b) to (3b).

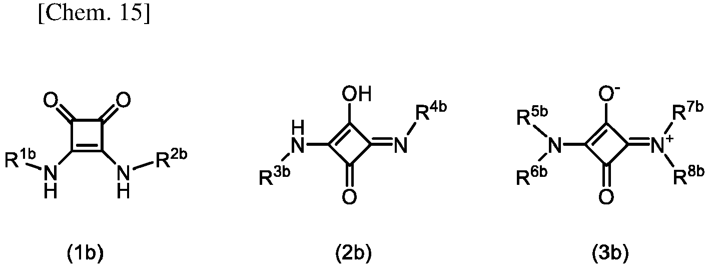

In the formula, R^{1b} to R^{8b} each independently represent an alkyl group having 1 to 5 carbon atoms, an aryl group having 6 to 20 carbon atoms, an aralkyl group having 7 to 20 carbon atoms, a monovalent heterocyclic group having 4 to 20 carbon atoms, a heterocyclic alkyl group having 5 to 20 carbon atoms, a group represented by the following formula (P), or a group represented by the following formula (Q). 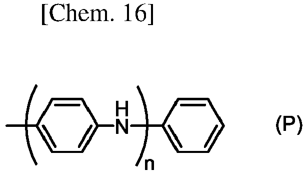 wherein n represents an integer of 1 to 5. 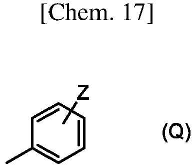 wherein Z represents a halogen atom, a hydroxy group, an alkyl group having 1 to 5 carbon atoms, an alkoxy group having 1 to 5 carbon atoms, an alkylthio group having 1 to 5 carbon atoms, or an aryl group having 6 to 10 carbon atoms.

The alkyl group having 1 to 5 carbon atoms may be linear, branched, or cyclic, and examples thereof include a methyl group, an ethyl group, an n-propyl group, an i-propyl group, a c-propyl group, an n-butyl group, an i-butyl group, a s-butyl group, a t-butyl group, a c-butyl group, an n-pentyl group, a 1-methyl-n-butyl group, a 2-methyl-n-butyl group, a 3-methyl-n-butyl group, a 1,1-dimethyl-n-propyl group, a 2,2-dimethyl-n-propyl group, a c-pentyl group, a 2-methyl-c-butyl group, and the like.

Examples of the aryl group having 6 to 20 carbon atoms include a phenyl group, an α-naphthyl group, a β-naphthyl group, an o-biphenylyl group, an m-biphenylyl group, a p-biphenylyl group, a 1-anthryl group, a 2-anthryl group, a 9-anthryl group, a 1-phenanthryl group, a 2-phenanthryl group, a 3-phenanthryl group, a 4-phenanthryl group, a 9-phenanthryl group, a pyrenyl group, and the like.

In addition, examples of the aryl group having 6 to 10 carbon atoms include those having 6 to 10 carbon atoms among them.

Examples of the aralkyl group having 7 to 20 carbon atoms include a benzyl group, a 2-methylphenylmethyl group, a 3-methylphenylmethyl group, a 4-methylphenylmethyl group, a 2-ethylphenylmethyl group, a 3-ethylphenylmethyl group, a 4-ethylphenylmethyl group, a 2-propylphenylmethyl group, a 4-isopropylphenylmethyl group, a 4-isobutylphenylmethyl group, a phenethyl group, a 3-phenylpropyl group, a 2-phenyl-2-propyl group, an α-naphthylmethyl group, a β-naphthylmethyl group, an α-naphthylethyl group, a β-naphthylethyl group, a 1-anthrylmethyl group, a 2-anthrylmethyl group, a 9-anthrylmethyl group, a 1-anthrylethyl group, a 2-anthrylethyl group, a 9-anthrylethyl group, an o-biphenylylmethyl group, a m-biphenylylmethyl group, p-biphenylylmethyl group, and the like.

Examples of the monovalent heterocyclic group having 4 to 20 carbon atoms include a pyrrolyl group, a pyridyl group, a bipyridyl group, a terpyridyl group, a quinolyl group, an isoquinolyl group, a quinoxalyl group, an indolyl group, an isoindolyl group, a phenazinyl group, a fluorenyl group, a pyrimidyl group, an imidazolyl group, a benzimidazolyl group, an oxazolyl group, a quinolyl group, an isoquinolyl group, a thienyl group, a benzothienyl group, a benzofuranyl group, a dibenzothienyl group, a dibenzofuranyl group, a carbazolyl group, a xanthenyl group, a thioxanthenyl group, a tetrahydrofuranyl group, a tetrahydropyranyl group, and the like.

Examples of the heterocyclic alkyl group having 5 to 20 carbon atoms include a pyrrolylmethyl group, a pyrrolylethyl group, a pyridylmethyl group, a pyridylethyl group, a bipyridylmethyl group, a bipyridylethyl group, a terpyridylmethyl group, a terpyridylethyl group, a quinolylmethyl group, a quinolylethyl group, an isoquinolylmethyl group, an isoquinolylethyl group, a quinoxalylmethyl group, a quinoxalylethyl group, an indolylmethyl group, an indolylethyl group, an isoindolylmethyl group, an isoindolylethyl group, a phenazinylmethyl group, a phenazinylethyl group, a fluorenylmethyl group, a fluorenylethyl group, a pyrimidylmethyl group, a pyrimidylethyl group, an imidazolylmethyl group, an imidazolylethyl group, a benzimidazolylmethyl group, a benzimidazolylethyl group, an oxazolylmethyl group, an oxazolylethyl group, a quinolylmethyl group, a quinolylethyl group, an isoquinolylmethyl group, an isoquinolylethyl group, a thienylmethyl group, a thienylethyl group, a benzothienylmethyl group, a benzothienylethyl group, a benzofuranylmethyl group, a benzofuranylethyl group, a dibenzothienylmethyl group, a dibenzothienylethyl group, a dibenzofuranylmethyl group, a dibenzofuranylethyl group, a carbazolylmethyl group, a carbazolylethyl group, a xanthenylmethyl group, a xanthenylethyl group, a thioxanthenylmethyl group, a thioxanthenylethyl group, a tetrahydrofuranylmethyl group, a tetrahydrofuranylethyl group, a tetrahydropyranylmethyl group, a tetrahydropyranylethyl group, and the like.

The alkoxy group having 1 to 5 carbon atoms may be linear, branched, or cyclic, and examples thereof include a methoxy group, an ethoxy group, an isopropoxy group, and an n-pentyloxy group. The alkylthio group having 1 to 5 carbon atoms may be linear, branched, or cyclic, and examples thereof include a methylthio group, an ethylthio group, an isopropylthio group, and an n-pentylthio group. Examples of the halogen atom include fluorine, chlorine, bromine, and iodine atoms.

In the group represented by formula (P), n represents an integer of 1 to 5, but an integer of 1 to 3 is preferable. Suitable specific examples of the group represented by formula (P) include groups represented by the following formulas (P-1) to (P-3).

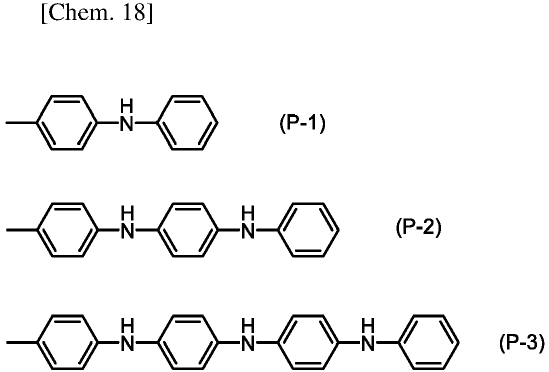

The group represented by formula (Q) is preferably a group represented by the following formula (Q'). 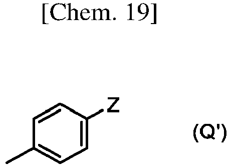 wherein Z is as defined above.

Z is preferably an alkyl group having 1 to 5 carbon atoms or an alkoxy group having 1 to 5 carbon atoms, more preferably a methyl group, an ethyl group, a methoxy group, or an ethoxy group, and still more preferably a methyl group or a methoxy group.

Suitable specific examples of the group represented by formula (Q) include groups represented by the following formulas (Q-1) and (Q-2). 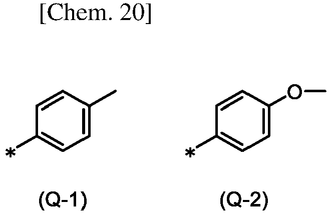 wherein ^{∗} represents an atomic bonding.

In the formula (1b), R^{1b} and R^{2b} are each independently preferably an aryl group having 6 to 10 carbon atoms or a group represented by formula (P), more preferably a phenyl group or a group represented by formulas (P-1) to (P-3), and still more preferably both R^{1b} and R^{2b} are a phenyl group or any of groups represented by formulas (P-1) to (P-3).

Specific examples of the squaric acid derivative represented by formula (1b) include, but are not limited to, those represented by the following formulas.

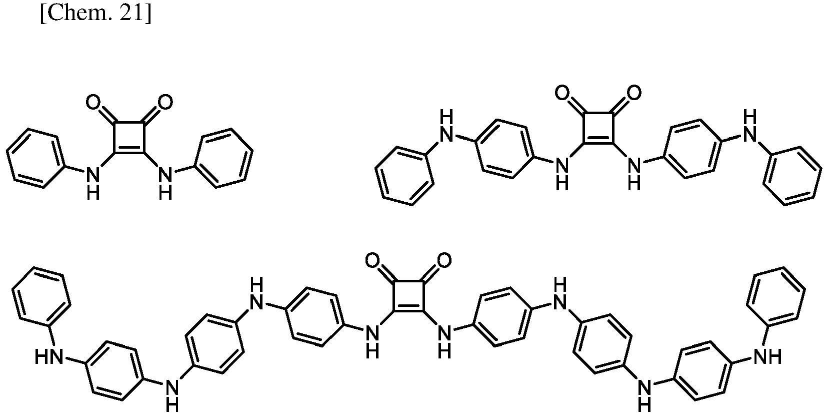

In the formula (2b), R^{3b} and R^{4b} are each independently preferably an aryl group having 6 to 10 carbon atoms or a group represented by formula (P), more preferably a phenyl group or a group represented by formulas (P-1) to (P-3), and still more preferably both R^{3b} and R^{4b} are a phenyl group or any of groups represented by formulas (P-1) to (P-3).

Specific examples of the squaric acid derivative represented by formula (2b) include, but are not limited to, those represented by the following formulas.

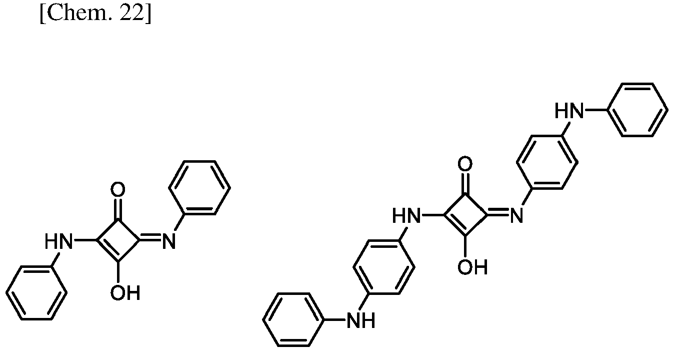

In the formula (3b), R^{5b} to R^{8b} are each independently preferably an alkyl group having 1 to 5 carbon atoms, an aryl group having 6 to 10 carbon atoms, or a group represented by formula (P), and more preferably a methyl group, a phenyl group, or a group represented by formulas (Q-1) to (Q-2). In addition, in the squaric acid derivative represented by formula (2c), R^{5b} to R^{8b} preferably have symmetry from the viewpoint of charge storage property and conductivity. Specific examples thereof include those in which all of R^{5b} to R^{8b} are the same groups, and those in which R^{5b} and R^{7b} are the same groups and R^{6b} and R^{8b} are the same groups.

Specific examples of the squaric acid derivative represented by formula (3b) include, but are not limited to, those represented by the following formulas.

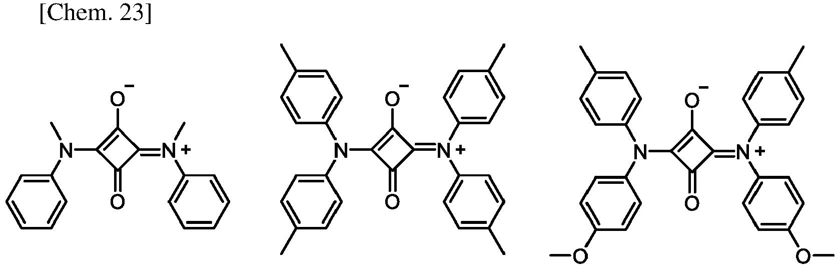

The squaric acid derivative represented by formula (1b) can be synthesized by reacting a squaric acid diester with an amine compound as shown in Organic Letters, 2004, 6, 4663.

The squaric acid derivative represented by formula (2b) can be synthesized by reacting squaric acid with an amine compound as shown in Journal of Molecular Structure 2009, 936, 239.

The squaric acid derivative represented by formula (3b) can be synthesized by a known method, and for example, can be synthesized by the method described in JP 5679448 B1. At that time, with reference to the description of JP 5679448 B1, the type, compounding amount, synthesis conditions, and the like of raw materials to be used may be appropriately selected and adjusted to synthesize a compound having a target structure.

The upper limit of the compounding amount of each organic compound is 1 wt% or less in the solid content, and is preferably 0.50 wt% or less, more preferably 0.30 wt% or less, and still more preferably 0.15 wt% or less. In addition, the lower limit of the compounding amount of each organic compound is preferably 0.01 wt% or more, and more preferably 0.05 wt% or more in the solid content. By setting the compounding amount of the organic compound within the above ranges, a battery having excellent rate characteristics and cycle characteristics can be obtained.

Examples of the inorganic active material include those exemplified in the first invention.

The compounding amount of the inorganic active material varies depending on required electrical and thermal characteristics, viscosity of the composition, production cost, and the like, but is preferably 80 to 99.8 wt%, more preferably 85 to 98.5 wt%, and still more preferably 90 to 98 wt% in the solid content.

The weight ratio of the inorganic active material and the organic compound (inorganic active material: organic compound) is preferably 100 : 0.01 to 100 : 1.25, more preferably 100 : 0.1 to 100 : 1.05, and still more preferably 100 : 0.1 to 100 : 0.6. By setting the weight ratio within the above ranges, rate characteristics and cycle characteristics of a secondary battery to be obtained can be effectively improved.

The electrode material may further contain a conductive additive, a binder, and a solvent (dispersion medium).

Examples of the conductive additive include those exemplified in the first invention. These can be used singly or in admixture of two or more kinds thereof.

The compounding amount of the conductive additive is not particularly limited, but is preferably 0.05 to 9 wt%, more preferably 0.1 to 6 wt%, and still more preferably 0.2 to 4 wt% in the solid content. By setting the compounding amount of the conductive additive within the above ranges, good electrical conductivity can be obtained.

Examples of the binder include those exemplified in the first invention. These can be used singly or in admixture of two or more kinds thereof.

The compounding amount of the binder is not particularly limited, but is preferably 0.14 to 10 wt%, more preferably 0.5 to 9 wt%, and still more preferably 1 to 8 wt% in the solid content. By setting the compounding amount of the binder within the above ranges, good adhesion to a current collecting substrate is obtained without lowering the capacity.

As in the first invention, the binder may be dissolved in an appropriate solvent in advance before mixing, as necessary. As the solvent at that time, those exemplified in the first invention may be also appropriately selected and used.

The solvent is not particularly limited as long as it can disperse or dissolve the raw materials to be used. Examples of such a solvent include those exemplified in the first invention. The solvents may be appropriately selected according to the raw materials to be used, but NMP is suitable when a water-insoluble binder such as PVdF is used. The solvents may be used singly or in admixture of two or more kinds thereof.

The electrode material according to the second invention can be suitably used as a material for forming an active material layer of an electrode.

The electrode of the present invention is an electrode having an active material layer (thin film) formed of the battery material according to the first invention or the electrode material according to the second invention (hereinafter, referred to as the battery material or the like) described above on a substrate that is a current collector, or is an electrode obtained by thinning the battery material or the like alone.

When the active material layer is formed on a substrate, examples of a method for forming the active material layer include a method of pressure-forming a composition for electrode formation prepared without using a solvent on a substrate (dry method), and a method of preparing an electrode-forming composition using a solvent, and applying it to a current collector, and drying it (wet method). These methods are not particularly limited, and various conventionally known methods can be used. Examples of the wet method include various printing methods such as offset printing and screen printing, doctor blading, dip coating, spin coating, bar coating, slit coating, an inkjet method, and the like.

Examples of the substrate used for the electrode include metal substrates such as platinum, gold, iron, stainless steel, copper, aluminum, and lithium, alloy substrates composed of any combination of these metals, oxide substrates such as indium tin oxide (ITO), indium zinc oxide (IZO), and antimony tin oxide (ATO), carbon substrates such as glassy carbon, pyrolytic graphite, and carbon felt, and the like.

In the case of thinning the battery material or the like alone, a thin film may be formed on a substrate that can be peeled off after thin film formation by appropriately using the above-described wet method and dry method, and a method of thinly extending the battery material or the like using a glass rod or the like on the substrate can also be adopted. As the substrate, a substrate having no adhesion to a thin film such as a glass plate can be used, and even a substrate having adhesion to a thin film can be used as long as the substrate has a surface subjected to a treatment for enabling peeling of a thin film (attachment of a release paper, formation of a release layer, or the like).

The film thickness of the active material layer (thin film) is not particularly limited, but is preferably about 0.01 to 1,000 µm, and more preferably about 1 to 100 µm. When the thin film is used alone as an electrode, the film thickness is preferably 10 µm or more.

Moreover, in order to further suppress elution of the active material contained in the electrode, the active material layer (thin film) may further contain a polyalkylene oxide and an ion conductive salt, or the electrode may be covered with a protective film. The protective film preferably contains a polyalkylene oxide and an ion conductive salt.

The polyalkylene oxide is not particularly limited, but polyethylene oxide, polypropylene oxide, and the like are preferable.

The numerical average molecular weight of the polyalkylene oxide is preferably 300,000 to 900,000, and more preferably 500,000 to 700,000. The numerical average molecular weight is a value measured in terms of polystyrene by gel permeation chromatography (GPC) using tetrahydrofuran as a solvent.

Further, examples of the ion conductive salt include lithium bis(trifluoromethanesulfonyl) imide (LiTFSI), lithium bis(pentafluoroethanesulfonyl) imide (LiBETI), lithium trifluoromethanesulfonate (LiCF₃SO₃), lithium perchlorate (LiClO₄), lithium tetrafluoroborate (LiBF₄), lithium hexafluorophosphate (LiPF6), and the like. It is preferable that 5 to 50 parts by weight of the ion conductive salt is contained per 100 parts by weight of the polyalkylene oxide.

The protective film can be formed, for example, by applying a composition containing a polyalkylene oxide, an ion conductive salt and a solvent on a substrate on which the active material layer (thin film) is formed by a method such as a dip method, and drying the composition at 40 to 60°C for 30 to 120 minutes.

As the solvent, acetonitrile, dichloromethane or the like is preferable.

The film thickness of the protective film is not particularly limited, and is preferably about 10 to 1,000 µm, and more preferably about 50 to 500 µm.

The secondary battery of the present invention includes the above-described electrode, and more specifically, includes at least a pair of positive and negative electrodes, a separator interposed between the respective electrodes, and an electrolyte, and at least one of the positive and negative electrodes is composed of the above-described electrode. Other constituent members of the battery element may be appropriately selected from conventionally known constituent members and used.

Examples of the material used for the separator include porous polyolefins, polyamides, polyesters, and the like.

As the electrolyte, an electrolytic solution composed of an electrolyte salt, which is a main body of ion conduction, a solvent and the like can be suitably used, from the viewpoint of easily exhibiting practically sufficient performance.

Examples of the electrolyte salt include lithium salts such as LiPF6, LiBF₄, LiN(C₂F₅SO₂)₂, LiAsF6, LiSbF6, LiAlF₄, LiGaF₄, LiInF₄, LiClO₄, LiN(CF₃SO₂)₂, LiCF₃SO₃, LiSiF6, and LiN(CF₃SO₂)(C₄F₉SO₂), metal iodides such as LiI, NaI, KI, CsI, and CaI₂, iodide salts of quaternary imidazolium compounds, iodide salts and perchlorate salts of tetraalkylammonium compounds, metal bromides such as LiBr, NaBr, KBr, CsBr, and CaBr₂, and the like. These electrolyte salts can be used singly or in admixture of two or more kinds thereof.

The solvent is not particularly limited as long as it does not cause corrosion or decomposition of a substance constituting the battery to deteriorate performance, and dissolves the electrolyte salt. For example, as the nonaqueous solvent, cyclic esters such as ethylene carbonate, propylene carbonate, butylene carbonate, and γ-butyrolactone, ethers such as tetrahydrofuran and dimethoxyethane, chain esters such as dimethyl carbonate, diethyl carbonate, and ethyl methyl carbonate, and the like are used. These solvents can be used singly or in admixture of two or more kinds thereof.

The electrode may be pressed as necessary. At this time, pressing pressure is preferably 1 kN/cm or more. As a pressing method, a generally employed method can be used, but a die pressing method or a roll pressing method is particularly preferable. Also, the pressing pressure is not particularly limited, but is preferably 2 kN/cm or more, and more preferably 3 kN/cm or more. The upper limit of the pressing pressure is preferably about 40 kN/cm, and more preferably about 30 kN/cm.

A battery produced using the battery material or the like is excellent in rate characteristics and cycle characteristics as compared with a general secondary battery.

The form of the secondary battery and the type of the electrolyte are not particularly limited, and any form of a lithium ion battery, a nickel hydrogen battery, a manganese battery, an air battery or the like may be used, and a lithium ion battery is suitable. Lamination method and production method are also not particularly limited.

In addition, the form of the cell is not particularly limited, and cells of various conventionally known forms such as a cylindrical type, a flat wound prismatic type, a stacked prismatic type, a coin type, a flat wound laminate type and a stacked laminate type can be adopted.

In the case of application to a coin-type cell, the above-described electrode of the present invention may be punched into a predetermined disk shape and used.

For example, a lithium ion secondary battery can be prepared by installing one electrode on a lid of a coin cell to which a washer and a spacer are welded, superimposing a separator impregnated with an electrolytic solution and having the same shape thereon, further superimposing the electrode of the present invention thereon with an active material layer facing down, placing a case and a gasket, and sealing with a coin cell crimper.

In the case of producing a secondary battery including an electrode using only the carbon nanostructure as an active material, conditions and methods similar to the above-described conditions and methods can be adopted except that only the carbon nanostructure is used as an active material instead of the above-described inorganic active material. In this case, the compounding amount of the carbon nanostructure in the composition for electrode formation may refer to the compounding amount of the inorganic active material.

For example, the electrode for a secondary battery is obtained by mixing the carbon nanostructure, a conductive additive such as carbon nanotubes, and a binder such as PVdF using a predetermined solvent to prepare a composition for electrode formation (electrode slurry or the like), uniformly spreading the resulting composition for electrode formation on an aluminum foil, and drying the composition to form an active material layer. In addition, when a coin-type lithium ion secondary battery is produced using the obtained electrode, the same method as described above can be adopted.

### EXAMPLES

Hereinafter, the present invention is described more specifically with reference to Examples and Comparative Examples, but the present invention is not limited to the following Examples. Meanwhile, measurement apparatuses used in Examples are as follows.
[Flow-type reactor]
   Apparatus: flow-type high temperature reaction system Phoenix Flow Reactor, manufactured by Thales Nanotechnology Inc.
[Conductivity measurement]
   Apparatus: low resistance meter Loresta-GP, manufactured by Mitsubishi Chemical Analytech Co., Ltd.
[Elemental analysis]
   Apparatus: fully automatic elemental analyzer CHNS/O analyzer 2400, manufactured by PerkinElmer, Inc.

The obtained solution was placed in an aluminum cup container and dried on a hot plate at 150°C to obtain a powder, and the powder was analyzed.
[Transmission electron microscope (TEM)]
   Apparatus: H-8000, manufactured by Hitachi, Ltd.

A TEM substrate was immersed in the obtained solution and dried, and the resultant was observed at an accelerating voltage of 200 kV and a magnification of 20,000 times, diameters of 10 particles were measured, and the number average particle size was determined.
[Planetary centrifugal mixer]
   Apparatus: Awatori Rentaro ARE-310, manufactured by THINKY CORPORATION
[Roll pressing machine]
   Apparatus: Pressurizing/heating roll pressing machine SA-602, manufactured by Takumi Giken Co., Ltd.
[Coin cell crimper]
   Apparatus: manual coin crimper CR2032, manufactured by Hohsen Corp.
[Micrometer]
   Apparatus: IR54, manufactured by Mitutoyo Corporation
[Charge-discharge measuring system]
   Apparatus: TOSCAT 3100, manufactured by Toyo System Co., Ltd.

### [First invention]

### [1] Production of carbon nanostructures (carbon quantum dots)

### (1) Preparation of aqueous solutions of carbon nanostructures

### [Example 1-1]

Using 20.0 g (0.1 mol) of citric acid (manufactured by FUJIFILM Wako Pure Chemical Corporation) as a carbon source, 12.5 g (0.2 mol) of ethylenediamine (manufactured by Tokyo Chemical Industry Co., Ltd.) was dissolved in 292 g of water as a nitrogen source to prepare an aqueous solution having a raw material concentration of 10 wt%. Using a flow-type reactor, the aqueous solution was continuously synthesized under conditions of a flow rate of 4 mL/min. (residence time: 2 minutes) and a temperature of 300°C to obtain an aqueous solution A1 of a carbon nanostructure.

As a result of elemental analysis, carbon content was 38.8 wt%, hydrogen content was 7.1 wt%, and nitrogen content was 17.0 wt%. Also, particle size was 5 nm.

Water was distilled off under reduced pressure from the obtained aqueous solution A1 to obtain a reddish brown solid D1. The solid D1 was placed in a high-resistance probe unit for powder, pressurized to 20 kN with a low resistance meter Loresta-GP, and conductivity was measured and found to be equal to or less than a detection limit.

### [Example 1-2]

An aqueous solution A2 was prepared in the same manner as in Example 1-1 except that the reaction temperature was changed to 340°C.

As a result of elemental analysis, carbon content was 46.0 wt%, hydrogen content was 7.9 wt%, and nitrogen content was 17.6 wt%. Also, particle size was 5 nm.

In the same manner as in Example 1-1, conductivity of a reddish brown solid D2 obtained by distilling off water under reduced pressure from the obtained aqueous solution A2 was measured and found to be equal to or less than the detection limit.

### [Example 1-3]

An aqueous solution A3 was prepared in the same manner as in Example 1-1 except that the raw material ethylenediamine was changed to N-ethylethylenediamine.

As a result of elemental analysis, carbon content was 57.5 wt%, hydrogen content was 7.6 wt%, and nitrogen content was 16.7 wt%. Also, particle size was 14 nm.

In the same manner as in Example 1-1, conductivity of a reddish brown solid D3 obtained by distilling off water under reduced pressure from the obtained aqueous solution A3 was measured and found to be equal to or less than the detection limit.

### [Example 1-4]

An aqueous solution A4 was prepared in the same manner as in Example 1-1 except that the raw material ethylenediamine was changed to 2-(2-aminoethylamino)ethanol.

As a result of elemental analysis, carbon content was 53.3 wt%, hydrogen content was 7.0 wt%, and nitrogen content was 16.0 wt%. Also, particle size was 7 nm.

In the same manner as in Example 1-1, conductivity of a reddish brown solid D4 obtained by distilling off water under reduced pressure from the obtained aqueous solution A4 was measured and found to be equal to or less than the detection limit.

### [Comparative Example 1-1]

An aqueous solution A5 was prepared in the same manner as in Example 1-1 except that the raw material was changed to only citric acid.

As a result of elemental analysis, carbon content was 44.5 wt%, hydrogen content was 4.5 wt%, and nitrogen content was 0.0 wt%. Also, particle size was 10 nm.

In the same manner as in Example 1-1, conductivity of a reddish brown solid D5 obtained by distilling off water under reduced pressure from the obtained aqueous solution A5 was measured and found to be equal to or less than the detection limit.

### [Comparative Example 1-2]

An aqueous solution A6 was prepared in the same manner as in Example 1-1 except that the raw material was changed to only glucose, and the reaction temperature was changed to 250°C.

As a result of elemental analysis, carbon content was 41.9 wt%, hydrogen content was 6.6 wt%, and nitrogen content was 0.0 wt%. Also, particle size was 200 nm.

In the same manner as in Example 1-1, conductivity of a reddish brown solid D6 obtained by distilling off water under reduced pressure from the obtained aqueous solution A6 was measured and found to be equal to or less than the detection limit.

### (2) Solvent replacement

### [Example 2-1]

An appropriate amount of NMP was added to the aqueous solution A1 obtained in Example 1-1, and water was removed by distillation under reduced pressure in a rotary evaporator. The resulting solution was passed through a 1.0 µm filter to remove aggregates, thereby obtaining an NMP solution B1. Solid content was measured as a dry residue after drying at 150°C for 2 hours, and found to be 6.9 wt%.

### [Example 2-2]

An NMP solution B2 was obtained in the same manner as in Example 2-1 except that the aqueous solution A2 obtained in Example 1-2 was used instead of the aqueous solution A1. Solid content was 6.2 wt%.

### [Example 2-3]

An NMP solution B3 was obtained in the same manner as in Example 2-1 except that the aqueous solution A3 obtained in Example 1-3 was used instead of the aqueous solution A1. Solid content was 5.4 wt%.

### [Example 2-4]

An NMP solution B4 was obtained in the same manner as in Example 2-1 except that the aqueous solution A4 obtained in Example 1-4 was used instead of the aqueous solution A1. Solid content was 4.5 wt%.

### [Comparative Example 2-1]

An NMP solution B5 was obtained in the same manner as in Example 2-1 except that the aqueous solution A5 obtained in Comparative Example 1-1 was used instead of the aqueous solution A1. Solid content was 5.4 wt%.

### [Comparative Example 2-2]

An NMP solution B6 was obtained in the same manner as in Example 2-1 except that the aqueous solution A6 obtained in Comparative Example 1-2 was used instead of the aqueous solution A1. Solid content was 12.6 wt%.

### [2] Production and evaluation of lithium ion battery

### (1) Production of secondary battery including electrode using only carbon nanostructure as active material

### [Example 3-1]

5.66 g of the NMP solution B1 (solid content concentration: 6.7 wt%) obtained in Example 2-1, 1.126 g of carbon nanotube (VGCF-H, manufactured by Showa Denko K.K.) as a conductive additive, and 3.12 g of an NMP solution of PVdF (KF Polymer #1200, manufactured by KUREHA CORPORATION) as a binder (solid content concentration: 12 wt%) were mixed in a mortar (solid content weight ratio: 20 : 60 : 20) to prepare an electrode slurry (solid content concentration: 19 wt%). The prepared electrode slurry was uniformly spread on an aluminum foil (1085, manufactured by UACJ Corporation, substrate thickness: 15 µm) by a doctor blade method (wet film thickness: 200 µm), and then dried at 80°C for 30 minutes followed by at 120°C for 30 minutes to form an active material layer. This was pressure-bonded with a roll pressing machine to produce an electrode C1 (film thickness: 35 µm).

The obtained electrode C1 was punched into a disk shape with a diameter of 10 mm and its weight was measured, then it was vacuum-dried at 120°C for 12 hours and transferred to a glove box filled with argon.

Six lithium foils (manufactured by The Honjo Chemical Corporation, thickness: 0.17 mm) punched out to a diameter of 14 mm were installed on a lid of a 2032 type coin cell (manufactured by Hohsen Corp.) to which a washer and a spacer were welded, and a separator (2400, manufactured by Celgard LLC) punched out to a diameter of 16 mm and impregnated with an electrolytic solution (containing ethylene carbonate : diethyl carbonate =1:1 (volume ratio) and 1 mol/L lithium hexafluorophosphate as an electrolyte, manufactured by KISHIDA CHEMICAL Co.,Ltd.) for 24 hours or more was superimposed thereon. The electrode C1 was further superimposed thereon with a surface on which the active material layer was formed facing down. After dropping one drop of the electrolytic solution, a case and a gasket were placed thereon and sealed with a coin cell crimper. Thereafter, the battery was allowed to stand for 24 hours to obtain a secondary battery for testing.

### [Examples 3-2 to 3-4]

Electrodes C2 to C4 and a secondary battery for testing were produced in the same manner as in Example 3-1 except that the NMP solutions B2 to B4 obtained in Examples 2-2 to 2-4 were used so as to have the same solid content weight ratio as in Example 2-1.

### [Comparative Examples 3-1 to 3-3]

Electrodes C5 to C7 and a secondary battery for testing were produced in the same manner as in Example 3-1 except that the NMP solutions B5 to B6 obtained in Comparative Examples 2-1 to 2-2 and powder acetylene black were used so as to have the same solid content weight ratio as in Example 2-1.

Discharge capacities of the secondary batteries including each of the electrodes C1 to C7 produced in Examples 3-1 to 3-4 and Comparative Examples 3-1 to 3-3 were evaluated under the following test conditions. The results of discharge capacities at 0.05 C discharge are shown in Table 1.

**[Measurement conditions]**

| | |
|---|---|
| • Current: | theoretical capacity of constant current charging at 0.05 C was set to 100 mAh/g. |
| • Cut-off voltage: | 4.2 V to 2.0 V |
| • Temperature: | room temperature |

**[Table 1]**

| | Electrode | Discharge capacity [mAh/g] |
|---|---|---|
| Example 3-1 | C1 | 58 |
| Example 3-2 | C2 | 53 |
| Example 3-3 | C3 | 46 |
| Example 3-4 | C4 | 63 |
| Comparative Example 3-1 | C5 | 6.7 |
| Comparative Example 3-2 | C6 | 5.5 |
| Comparative Example 3-3 | C7 | 8.7 |

### (2) Production of electrode

### [Example 4-1]

2.781 g of a ternary positive electrode active material Li(Ni_{0.5}Co_{0.2}Mn_{0.3})O₂ (NCM523-5Y, manufactured by Beijing Easping Material Technology), 0.052 g of acetylene black (manufactured by Denka Company Limited) as a conductive additive, 0.042 g of the solution B1 prepared in Example 2-1, and 1.28 g of an NMP solution of PVdF (#7300, manufactured by KUREHA CORPORATION) (solid content concentration: 5 wt%) as a binder were mixed (solid content weight ratio: 95.9 : 1.8 : 0.1 : 2.2), and 0.859 g of NMP was further mixed so that the total solid content concentration was 58 wt%. This was mixed with a planetary centrifugal mixer (2,000 rpm for 10 min for 3 times) to prepare a slurry for electrode formation. This was uniformly spread on an aluminum foil (1085, manufactured by UACJ, substrate thickness: 15 µm) by a doctor blade method (wet film thickness: 100 µm), and then dried at 80°C for 30 minutes followed by at 120°C for 30 minutes to form an active material layer. This was pressure-bonded with a roll pressing machine to produce an electrode D1 (film thickness: 40 µm).

### [Example 4-2]

2.770 g of a ternary positive electrode active material Li(Ni_{0.5}Co_{0.2}Mn_{0.3})O₂ (NCM523-5Y, manufactured by Beijing Easping Material Technology), 0.052 g of acetylene black (manufactured by Denka Company Limited) as a conductive additive, 0.210 g of the solution B1 prepared in Example 2-1, and 1.28 g of an NMP solution of PVdF (#7300, manufactured by KUREHA CORPORATION) (solid content concentration: 5 wt%) as a binder were mixed (solid content weight ratio: 95.5 : 1.8 : 0.5 : 2.2), and 0.692 g of NMP was further mixed so that the total solid content concentration was 58 wt%. This was mixed with a planetary centrifugal mixer (2,000 rpm for 10 min for 3 times) to prepare a slurry for electrode formation. This was uniformly spread on an aluminum foil (1085, manufactured by UACJ, substrate thickness: 15 µm) by a doctor blade method (wet film thickness: 100 µm), and then dried at 80°C for 30 minutes followed by at 120°C for 30 minutes to form an active material layer. This was pressure-bonded with a roll pressing machine to produce an electrode D2 (film thickness: 40 µm).

### [Example 4-3]

2.770 g of a ternary positive electrode active material Li(Ni_{0.5}Co_{0.2}Mn_{0.3})O₂ (NCM523-5Y, manufactured by Beijing Easping Material Technology), 0.052 g of acetylene black (manufactured by Denka Company Limited) as a conductive additive, 0.233 g of the solution B2 prepared in Example 2-2, and 1.28 g of an NMP solution of PVdF (#7300, manufactured by KUREHA CORPORATION) (solid content concentration: 5 wt%) as a binder were mixed (solid content weight ratio: 95.5 : 1.8 : 0.5 : 2.2), and 0.669 g of NMP was further mixed so that the total solid content concentration was 58 wt%. This was mixed with a planetary centrifugal mixer (2,000 rpm for 10 min for 3 times) to prepare a slurry for electrode formation. This was uniformly spread on an aluminum foil (1085, manufactured by UACJ, substrate thickness: 15 µm) by a doctor blade method (wet film thickness: 100 µm), and then dried at 80°C for 30 minutes followed by at 120°C for 30 minutes to form an active material layer. This was pressure-bonded with a roll pressing machine to produce an electrode D3 (film thickness: 37 µm).

### [Example 4-4]

2.770 g of a ternary positive electrode active material Li(Ni_{0.5}Co_{0.2}Mn_{0.3})O₂ (NCM523-5Y, manufactured by Beijing Easping Material Technology), 0.052 g of acetylene black (manufactured by Denka Company Limited) as a conductive additive, 0.065 g of the solution B3 prepared in Example 2-3, and 1.28 g of an NMP solution of PVdF (#7300, manufactured by KUREHA CORPORATION) (solid content concentration: 5 wt%) as a binder were mixed (solid content weight ratio: 95.5 : 1.8 : 0.5 : 2.2), and 0.826 g of NMP was further mixed so that the total solid content concentration was 58 wt%. This was mixed with a planetary centrifugal mixer (2,000 rpm for 10 min for 3 times) to prepare a slurry for electrode formation. This was uniformly spread on an aluminum foil (1085, manufactured by UACJ, substrate thickness: 15 µm) by a doctor blade method (wet film thickness: 100 µm), and then dried at 80°C for 30 minutes followed by at 120°C for 30 minutes to form an active material layer. This was pressure-bonded with a roll pressing machine to produce an electrode D4 (film thickness: 42 µm) .

### [Example 4-5]

2.770 g of a ternary positive electrode active material Li(Ni_{0.5}Co_{0.2}Mn_{0.3})O₂ (NCM523-5Y, manufactured by Beijing Easping Material Technology), 0.052 g of acetylene black (manufactured by Denka Company Limited) as a conductive additive, 0.054 g of the solution B4 prepared in Example 2-4, and 1.28 g of an NMP solution of PVdF (#7300, manufactured by KUREHA CORPORATION) (solid content concentration: 5 wt%) as a binder were mixed (solid content weight ratio: 95.5 : 1.8 : 0.5 : 2.2), and 0.837 g of NMP was further mixed so that the total solid content concentration was 58 wt%. This was mixed with a planetary centrifugal mixer (2,000 rpm for 10 min for 3 times) to prepare a slurry for electrode formation. This was uniformly spread on an aluminum foil (1085, manufactured by UACJ, substrate thickness: 15 µm) by a doctor blade method (wet film thickness: 100 µm), and then dried at 80°C for 30 minutes followed by at 120°C for 30 minutes to form an active material layer. This was pressure-bonded with a roll pressing machine to produce an electrode D5 (film thickness: 42 µm).

### [Comparative Example 4-1]

2.784 g of a ternary positive electrode active material Li(Ni_{0.5}Co_{0.2}Mn_{0.3})O₂ (NCM523-5Y, manufactured by Beijing Easping Material Technology), 0.052 g of acetylene black (manufactured by Denka Company Limited) as a conductive additive, and 1.28 g of an NMP solution of PVdF (#7300, manufactured by KUREHA CORPORATION) (solid content concentration: 5 wt%) as a binder were mixed (solid content weight ratio: 96 : 1.8 : 2.2), and 0.888 g of NMP was further mixed so that the total solid content concentration was 58 wt%. This was mixed with a planetary centrifugal mixer (2,000 rpm for 10 min for 3 times) to prepare a slurry for electrode formation. This was uniformly spread on an aluminum foil (1085, manufactured by UACJ, substrate thickness: 15 µm) by a doctor blade method (wet film thickness: 100 µm), and then dried at 80°C for 30 minutes followed by at 120°C for 30 minutes to form an active material layer. This was pressure-bonded with a roll pressing machine to produce an electrode D6 (film thickness: 40 µm) .

### [Comparative Example 4-2]

2.770 g of a ternary positive electrode active material Li(Ni_{0.5}Co_{0.2}Mn_{0.3})O₂ (NCM523-5Y, manufactured by Beijing Easping Material Technology), 0.052 g of acetylene black (manufactured by Denka Company Limited) as a conductive additive, 0.271 g of the solution B5 prepared in Comparative Example 2-1, and 1.28 g of an NMP solution of PVdF (#7300, manufactured by KUREHA CORPORATION) (solid content concentration: 5 wt%) as a binder were mixed (solid content weight ratio: 95.5 : 1.8 : 0.5 : 2.2), and 0.631 g of NMP was further mixed so that the total solid content concentration was 58 wt%. This was mixed with a planetary centrifugal mixer (2,000 rpm for 10 min for 3 times) to prepare a slurry for electrode formation. This was uniformly spread on an aluminum foil (1085, manufactured by UACJ, substrate thickness: 15 µm) by a doctor blade method (wet film thickness: 100 µm), and then dried at 80°C for 30 minutes followed by at 120°C for 30 minutes to form an active material layer. This was pressure-bonded with a roll pressing machine to produce an electrode D7 (film thickness: 41 µm) .

### [Comparative Example 4-3]

2.770 g of a ternary positive electrode active material Li(Ni_{0.5}Co_{0.2}Mn_{0.3})O₂ (NCM523-5Y, manufactured by Beijing Easping Material Technology), 0.052 g of acetylene black (manufactured by Denka Company Limited) as a conductive additive, 0.115 g of the solution B6 prepared in Comparative Example 2-2, and 1.28 g of an NMP solution of PVdF (#7300, manufactured by KUREHA CORPORATION) (solid content concentration: 5 wt%) as a binder were mixed (solid content weight ratio: 95.5 : 1.8 : 0.5 : 2.2), and 0.787 g of NMP was further mixed so that the total solid content concentration was 58 wt%. This was mixed with a planetary centrifugal mixer (2,000 rpm for 10 min for 3 times) to prepare a slurry for electrode formation. This was uniformly spread on an aluminum foil (1085, manufactured by UACJ, substrate thickness: 15 µm) by a doctor blade method (wet film thickness: 100 µm), and then dried at 80°C for 30 minutes followed by at 120°C for 30 minutes to form an active material layer. This was pressure-bonded with a roll pressing machine to produce an electrode D8 (film thickness: 40 µm).

### [Comparative Example 4-4]

2.770 g of a ternary positive electrode active material Li(Ni_{0.5}Co_{0.2}Mn_{0.3})O₂ (NCM523-5Y, manufactured by Beijing Easping Material Technology), 0.055 g of acetylene black (manufactured by Denka Company Limited) as a conductive additive, and 1.28 g of an NMP solution of PVdF (#7300, manufactured by KUREHA CORPORATION) (solid content concentration: 5 wt%) as a binder were mixed (solid content weight ratio: 95.5 : 2.3 : 2.2), and 0.888 g of NMP was further mixed so that the total solid content concentration was 58 wt%. This was mixed with a planetary centrifugal mixer (2,000 rpm for 10 min for 3 times) to prepare a slurry for electrode formation. This was uniformly spread on an aluminum foil (1085, manufactured by UACJ, substrate thickness: 15 µm) by a doctor blade method (wet film thickness: 100 µm), and then dried at 80°C for 30 minutes followed by at 120°C for 30 minutes to form an active material layer. This was pressure-bonded with a roll pressing machine to produce an electrode D9 (film thickness: 40 µm).

### (3) Production of lithium ion battery

### [Example 5-1]

A secondary battery for testing was prepared in the same manner as in Example 3-1 except that the electrode D1 prepared in Example 4-1 was used.

### [Examples 5-2 to 5-5]

Secondary batteries for testing were prepared in the same manner as in Example 4-1 except that the electrodes D2 to D5 prepared in Examples 4-2 to 4-5 were used instead of the electrode D1.

### [Comparative Examples 5-1 to 5-4]

Secondary batteries for testing were prepared in the same manner as in Example 4-1 except that the electrodes D6 to D9 prepared in Comparative Examples 4-1 to 4-4 were used instead of the electrode D1.

For the lithium ion secondary batteries produced in Examples 5-1 to 5-5 and Comparative Examples 5-1 to 5-4, physical properties of the electrodes were evaluated under the following conditions using a charge and discharge measuring system. The measurement results of discharge capacities of each secondary battery at discharge rates of 0.2 C and 10 C discharge are shown in Table 2. The discharge capacity indicates a ratio based on the discharge capacity of Comparative Example 5-1.

### [Measurement conditions]

- Rate characteristics:
   Current: 0.2 C constant current charge, 0.2 C, 0.5 C, 3 C, 5 C, 10 C constant current discharge (capacity of Li(Ni_{0.5}Co_{0.2}Mn_{0.3})O₂ was set to 160 mAh/g, discharge rate for every 2 cycles was increased, and then, the discharge rate was finally set to 0.5 C)
- Cut-off voltage: 4.20 V to 3.00 V
- Temperature: room temperature

**[Table 2]**

| | Electrode | Material | Preparation conditions | Added amount [wt%] | Discharge capacity ratio at 0.2 C [%] | Discharge capacity ratio at 10C [%] |
|---|---|---|---|---|---|---|
| Example 5-1 | D1 | Carbon quantum dot | CA:EDA = 1:2 300°C | 0.1 | 99.7 | 109.4 |
| Example 5-2 | D2 | Carbon quantum dot | CA:EDA = 1:2 300°C | 0.5 | 99.8 | 102.8 |
| Example 5-3 | D3 | Carbon quantum dot | CA:EDA = 1:2 340°C | 0.5 | 101.1 | 134.8 |
| Example 5-4 | D4 | Carbon quantum dot | CA:EEDA = 1:2 300°C | 0.1 | 99.8 | 109.0 |
| Example 5-5 | D5 | Carbon quantum dot | CA:AEAE = 1:2 300°C | 0.1 | 101.2 | 106.2 |
| Comparative Example 5-1 | D6 | Not added | | 0 | 100 | 100 |
| Comparative Example 5-2 | D7 | Carbon quantum dot | Only CA 300°C | 0.5 | 90.5 | 64.9 |
| Comparative Example 5-3 | D8 | Carbon particle | Only glucose 250°C | 0.5 | 92.3 | 56.0 |
| Comparative Example 5-4 | D9 | AB (increase in conductive additive) | | 0.5 | 100.3 | 92.5 |

| | | | | | | |
|---|---|---|---|---|---|---|
| ^{∗}In the table, CA represents citric acid, EDA represents ethylenediamine, EEDA represents N-ethylethylenediamine, AEAE represents 2-(2-aminoethylamino)ethanol, and AB represents acetylene black. | | | | | | |

For the lithium ion secondary batteries produced in Examples 5-1, 5-4, and 5-5 and Comparative Example 5-1, physical properties of the electrodes were evaluated under the following conditions using a charge and discharge measuring system. Ratios of the charge capacities of each secondary battery at discharge rates of 0.2 C and 10 C charge, based on the charge capacity of Comparative Example 5-1, are shown in Table 3.

### [Measurement conditions]

- Rate characteristics:
   Current: 0.2 C, 0.5 C, 3 C, 5 C, 10 C constant current charge, 0.2 C constant current discharge (capacity of Li(Ni_{0.5}Co_{0.2}Mn_{0.3})O₂ was set to 160 mAh/g, charge rate for every 2 cycles was increased, and then, the charge rate was finally set to 0.5 C)
- Cut-off voltage: 4.20 V to 3.00 V
- Temperature: room temperature

**[Table 3]**

| | Electrode | Material | Preparation conditions | Added amount [wt%] | Charge capacity ratio at 0.2 C [%] | Charge capacity ratio at 10C [%] |
|---|---|---|---|---|---|---|
| Example 5-1 | D1 | Carbon quantum dot | CA:EDA = 1:2 300°C | 0.1 | 100.0 | 108.6 |
| Example 5-4 | D4 | Carbon quantum dot | CA:EEDA = 1:2 300°C | 0.1 | 99.7 | 110.4 |
| Example 5-5 | D5 | Carbon quantum dot | CA:AEAE = 1:2 300°C | 0.1 | 101.2 | 105.4 |
| Comparative Example 5-1 | D6 | Not added | | 0 | 100 | 100 |

| | | | | | | |
|---|---|---|---|---|---|---|
| ^{∗}In the table, CA represents citric acid, EDA represents ethylenediamine, EEDA represents N-ethylethylenediamine, and AEAE represents 2-(2-aminoethylamino)ethanol. | | | | | | |

From the results of Tables 2 and 3, it was confirmed that a battery having excellent rate characteristics is obtained by using a battery material containing the carbon nanostructure defined in the present invention. In addition, it was confirmed that the effect was obtained in both cases of charge (input) and discharge (output).

### [Second invention]

### [1] Synthesis of organic compound having charge storage capacity

### [Synthesis Example 1] Synthesis of triarylamine-based hyperbranched polymer PTPA-PBA

A triarylamine-based hyperbranched polymer PTPA-PBA was synthesized according to the method described in Synthesis Example 1 of WO 2014/042080 A.

The obtained PTPA had a weight average molecular weight Mw of 17,000 as measured in terms of polystyrene by GPC and a polydispersity Mw/Mn of 3.82 (herein, Mn represents a numerical average molecular weight measured under the same conditions.). For the measurement of GPC, HLC-8200GPC manufactured by Tosoh Corporation was used.

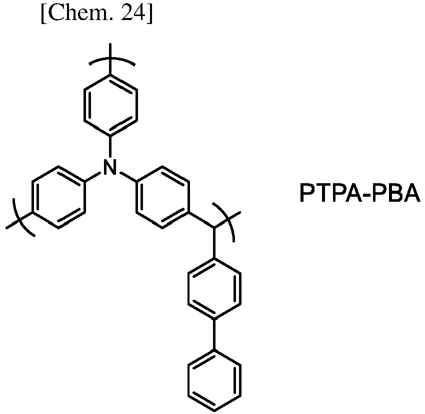

### [Synthesis Example 2] Synthesis of carbazole polymer (TEGCz)₂

Carbazole polymer (TEGCz)₂ was synthesized according to the methods described in Synthesis Examples 1 and 2 of JP 5983631 B2.

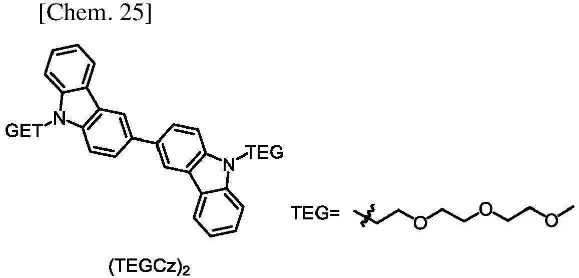

### [Synthesis Example 3] Synthesis of squaric acid derivative SQ-1

Squaric acid derivative SQ-1 was synthesized by the following method.

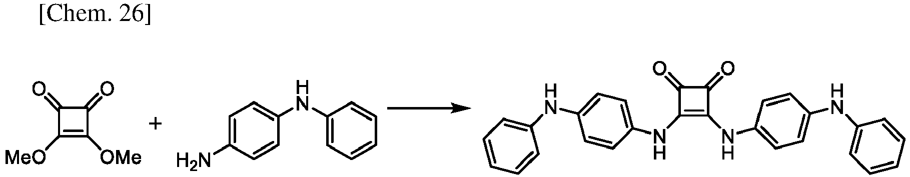

To a 50-mL recovery flask, 500 mg (3.52 mmol) of dimethyl squarate (manufactured by Tokyo Chemical Industry Co., Ltd.), 1.296 g (7.04 mmol) of 4-aminodiphenylamine (manufactured by Tokyo Chemical Industry Co., Ltd.), and 15 mL of dioxane were added, and the mixture was reacted at 60°C for 3 hours and at 100°C for 7 hours under a nitrogen atmosphere. After allowing to cool at room temperature, the reaction was filtered, and solid-liquid washed with diethyl ether to obtain yellow-orange powder SQ-1 (1.02 g, yield 63%).

### [2] Production and evaluation of lithium ion battery

### (1) Production of secondary battery including electrode using only organic compound having charge storage capacity as active material

### [Production Example 1-1]

In 5.76 g of NMP, 0.64 g of PTPA-PBA obtained in Synthesis Example 1 was dissolved to prepare a polymer solution having a solid content concentration of 10 wt%. Subsequently, 3.2 g of the polymer solution, 0.96 g of carbon nanotubes (VGCF-H, manufactured by Showa Denko K.K.) as a conductive additive, 2.67 g of an NMP solution of PVdF (KF Polymer #1120, manufactured by KUREHA CORPORATION) as a binder (solid content concentration: 12 wt%), and 0.468 g of the NMP solution for concentration adjustment were mixed in a mortar (solid content weight ratio: 20 : 60 : 20) to prepare an electrode slurry (solid content concentration: 20 wt%). The prepared electrode slurry was uniformly spread on an aluminum foil (1085, manufactured by UACJ Corporation, substrate thickness: 15 µm) by a doctor blade method (wet film thickness: 200 µm), and then dried at 80°C for 30 minutes followed by at 120°C for 30 minutes to form an active material layer. This was pressure-bonded with a roll pressing machine to produce an electrode E1 (film thickness: 45 µm).

The obtained electrode E1 was punched into a disk shape with a diameter of 10 mm and its weight was measured, then it was vacuum-dried at 120°C for 12 hours and transferred to a glove box filled with argon.

Six lithium foils (manufactured by The Honjo Chemical Corporation, thickness: 0.17 mm) punched out to a diameter of 14 mm were installed on a lid of a 2032 type coin cell (manufactured by Hohsen Corp.) to which a washer and a spacer were welded, and a separator (2400, manufactured by Celgard LLC) punched out to a diameter of 16 mm and impregnated with an electrolytic solution (containing ethylene carbonate : diethyl carbonate = 1 : 1 (volume ratio) and 1 mol/L lithium hexafluorophosphate as an electrolyte, manufactured by KISHIDA CHEMICAL Co.,Ltd.) for 24 hours or more was superimposed thereon. The electrode E1 was further superimposed thereon with a surface on which the active material layer was formed facing down. After dropping one drop of the electrolytic solution, a case and a gasket were placed thereon and sealed with a coin cell crimper. Thereafter, the battery was allowed to stand for 24 hours to obtain a secondary battery for testing.

### [Production Example 1-2]

An electrode E2 and a secondary battery for testing were produced in the same manner as in Production Example 1-1 except that the carbazole polymer (TEGCz)₂ obtained in Synthesis Example 2 was used instead of using the PTPA-PBA obtained in Synthesis Example 1 as an organic compound having charge storage capacity.

Discharge capacities of the secondary batteries including each of the electrodes E1 to E2 produced in Production Examples 1-1 to 1-2 were evaluated under the following test conditions. The results of discharge capacities at 0.05 C discharge are shown in Table 4.

### [Measurement conditions]

- Current: theoretical capacity of constant current charging at 0.05 C was set to 100 mAh/g.
- Cut-off voltage: 2.0 V to 4.2 V
- Temperature: (25°C)

**[Table 4]**

| | Electrode | Discharge capacity [mAh/g] |
|---|---|---|
| Production Example 1-1 | E1 | 63 |
| Production Example 1-2 | E2 | 40 |

### [3] Preparation of electrode material, production of hybrid electrode containing organic compound having charge storage capacity and inorganic active material

### [Example 6-1]

2.373 g of lithium iron phosphate (LFP, TATUNG FINE CHEMICALS CO.) as an inorganic active material, 0.053 g of a 5 wt% NMP solution of PTPA-PBA produced in Synthesis Example 1, 1.76 g of an NMP solution (12 wt%, KUREHA CORPORATION, KF Polymer L#1120) of polyvinylidene fluoride (PVdF) as a binder, 0.053 g of acetylene black (solid content weight ratio: 89.9 : 0.1 : 8.0 : 2.0) as a conductive additive, and 1.261 g of NMP was further mixed so that the total solid content concentration was 48 wt%. This was mixed with a planetary centrifugal mixer (2,000 rpm for 10 min for 3 times) to prepare a slurry for electrode formation (electrode material). This was uniformly spread on an aluminum foil (1085, manufactured by UACJ, substrate thickness: 15 µm) by a doctor blade method (wet film thickness: 100 µm), and then dried at 80°C for 30 minutes followed by at 120°C for 30 minutes to form an active material layer. This was pressure-bonded with a roll pressing machine to produce an electrode F1 (film thickness: 25 µm) .

### [Example 6-2]

2.373 g of lithium iron phosphate (LFP, TATUNG FINE CHEMICALS CO.) as an inorganic active material, 0.053 g of a 5 wt% NMP solution of (TEGCz)₂ produced in Synthesis Example 2, 1.760 g of an NMP solution (12 wt%, KUREHA CORPORATION, KF Polymer L#1120) of polyvinylidene fluoride (PVdF) as a binder, 0.053 g of acetylene black (solid content weight ratio: 89.9 : 0.1 : 8.0 : 2.0) as a conductive additive, and 1.261 g of NMP was further mixed so that the total solid content concentration was 48 wt%. This was mixed with a planetary centrifugal mixer (2,000 rpm for 10 min for 3 times) to prepare a slurry for electrode formation (electrode material). This was uniformly spread on an aluminum foil (1085, manufactured by UACJ, substrate thickness: 15 µm) by a doctor blade method (wet film thickness: 100 µm), and then dried at 80°C for 30 minutes followed by at 120°C for 30 minutes to form an active material layer. This was pressure-bonded with a roll pressing machine to produce an electrode F2 (film thickness: 25 µm) .

### [Comparative Example 6-1]

2.376 g of lithium iron phosphate (LFP, TATUNG FINE CHEMICALS CO.) as an inorganic active material, 1.76 g of an NMP solution of PVdF (#7300, manufactured by KUREHA CORPORATION) as a binder (solid content concentration: 5 wt%), and 0.053 g of acetylene black (manufactured by Denka Company Limited) as a conductive additive were mixed (solid content weight ratio: 90 : 8.0 : 2.0), and 1.312 g of NMP was further mixed so that the total solid content concentration was 48 wt%. This was mixed with a planetary centrifugal mixer (2,000 rpm for 10 min for 3 times) to prepare a slurry for electrode formation (electrode material). This was uniformly spread on an aluminum foil (1085, manufactured by UACJ, substrate thickness: 15 µm) by a doctor blade method (wet film thickness: 100 µm), and then dried at 80°C for 30 minutes followed by at 120°C for 30 minutes to form an active material layer. This was pressure-bonded with a roll pressing machine to produce an electrode F3 (film thickness: 23 µm).

### [4] Production of lithium ion battery

### [Example 7-1]

A secondary battery for testing was prepared in the same manner as in Production Example 1-1 except that the electrode F1 prepared in Example 6-1 was used.

### [Example 7-2]

A secondary battery for testing was prepared in the same manner as in Production Example 1-1 except that the electrode F2 prepared in Example 6-2 was used instead of the electrode F1.

### [Comparative Example 7-1]

A secondary battery for testing was prepared in the same manner as in Production Example 1-1 except that the electrode F3 prepared in Comparative Example 6-1 was used instead of the electrode F1.

For the lithium ion secondary batteries produced in Examples 7-1 to 7-2 and Comparative Example 7-1, physical properties of the electrodes were evaluated under the following conditions using a charge and discharge measuring system. Discharge capacities of each secondary battery at 0.5 C and 10 C discharge indicate ratios based on the discharge capacity of Comparative Example 7-1.

### [Measurement conditions]

- Rate characteristics:
   Current: 0.5 C constant current charge, 0.2 C, 0.5 C, 3 C, 5 C, 10 C constant current discharge (capacity of LFP was set to 170 mAh/g, discharge rate for every 2 cycles was increased, and then, the discharge rate was finally set to 0.5 C)
- Cut-off voltage: 2.0 V to 4.2 V
- Temperature: (25°C)

**[Table 5]**

| | Electrode | Material | Added amount [wt%] | Discharge capacity ratio at 0.5 C [%] | Discharge capacity ratio at 10 C [%] |
|---|---|---|---|---|---|
| Example 7-1 | F1 | PTPA-PBA | 0.1 | 101.3 | 101.2 |
| Example 7-2 | F2 | (TEGCz)₂ | 0.1 | 100.1 | 101.3 |
| Comparative Example 7-1 | F3 | - | 0 | 100.0 | 100.0 |

From the results of Table 5, it was confirmed that a battery having excellent rate characteristics is obtained by using an electrode material containing an organic compound having charge transport capability.

## Claims

1. A battery material comprising a carbon nanostructure having charge storage capacity, wherein the carbon nanostructure provides a discharge capacity of 10 mAh/g or more in a secondary battery including an electrode using only the carbon nanostructure as an active material.

2. The battery material according to claim 1, wherein the discharge capacity is 30 mAh/g or more.

3. The battery material according to claim 2, wherein the discharge capacity is 45 mAh/g or more.

4. The battery material according to any one of claims 1 to 3, wherein the carbon nanostructure is a carbon quantum dot.

5. The battery material according to any one of claims 1 to 4, wherein the carbon nanostructure is non-conductive and contains nitrogen.

6. The battery material according to claim 5, wherein the nitrogen is derived from amines.

7. The battery material according to any one of claims 1 to 6, wherein carbon contained in the carbon nanostructure is derived from polycarboxylic acid or saccharides.

8. The battery material according to any one of claims 1 to 7, further comprising an inorganic active material, conductive carbon, and a binder.

9. The battery material according to claim 8, wherein the inorganic active material is at least one selected from a metal, a metalloid, a metal alloy, a metal oxide, a metalloid oxide, a metal phosphate, a metal sulfide, and a metal nitride.

10. The battery material according to claim 9, wherein the inorganic active material is at least one selected from FeS₂, TiS₂, MoS₂, LiFePO₄, V₂O₆, V₆O₁₃, MnO₂, LiCoO₂, LiMnO₂, LiMn₂O₄, LiMo₂O₄, LiV₃O₈, LiNiO₂, Li_{z}Ni_{y}M_{1-y}O₂ (provided that M represents at least one or more metal element selected from Co, Mn, Ti, Cr, V, Al, Sn, Pb, and Zn, and 0.05 ≤ z ≤ 1.10, 0.5 ≤ y ≤ 1.0), Li(NiₐCo_{b}Mn_{c})O₂ (provided that 0 < a < 1, 0 < b < 1, 0 < c < 1, a + b + c = 1), Li₄Ti₅O₁₂, Si, SiOₓ, AlOₓ, SnOₓ, SbOₓ, BiOₓ, GeOₓ, AsOₓ, PbOₓ, ZnOₓ, CdOₓ, InOₓ, TiOₓ and GaOₓ (provided that 0 < x ≤ 2).

11. The battery material according to any one of claims 8 to 10, wherein the battery material is for electrode formation.

12. An electrode material comprising an organic compound having charge storage capacity and an inorganic active material, wherein a content of the organic compound is 1 wt% or less in a solid content.

13. The electrode material according to claim 12, wherein the inorganic active material is at least one selected from a metal, a metalloid, a metal alloy, a metal oxide, a metalloid oxide, a metal phosphate, a metal sulfide, and a metal nitride.

14. The electrode material according to claim 13, wherein the inorganic active material is at least one selected from FeS₂, TiS₂, MoS₂, LiFePO₄ V₂O₆, V₆O₁₃, MnO₂, LiCoO₂, LiMnO₂, LiMn₂O₄, LiMo₂O₄, LiV₃O₈, LiNiO₂, Li_{z}Ni_{y}M_{1-y}O₂ (provided that M represents at least one or more metal element selected from Co, Mn, Ti, Cr, V, Al, Sn, Pb, and Zn, and 0.05 ≤ z ≤ 1.10, 0.5 ≤ y ≤ 1.0), Li(NiₐCo_{b}Mn_{c})O₂ (provided that 0 < a < 1, 0 < b < 1, 0 < c < 1, a + b + c = 1), Li₄Ti₅O₁₂, Si, SiOx, AlOx, SnOx, SbOx, BiOx, GeOx, AsOx, PbOx, ZnOₓ, CdOₓ, InOₓ, TiOₓ and GaOₓ (provided that 0 < x ≤ 2).

15. An electrode comprising an active material layer made of the battery material according to claim 11 or the electrode material according to any one of claims 12 to 14.

16. A secondary battery comprising the electrode according to claim 15.

17. A method for producing the battery material according to any one of claims 1 to 11, the method comprising:
a step of synthesizing a carbon nanostructure by mixing polycarboxylic acid or saccharides, amines, and a solvent, and heating the mixture.

18. The method for producing the battery material according to claim 17, wherein the synthesis is performed by solvothermal synthesis.

19. The method for producing the battery material according to claim 18, wherein the synthesis is performed by hydrothermal synthesis.

20. The method for producing the battery material according to claim 19, comprising a step of replacing a solvent of the carbon nanostructure aqueous solution obtained by hydrothermal synthesis by an organic solvent.

21. The method for producing the battery material according to any one of claims 8 to 10, the method comprising:
a step of preparing a solution or dispersion containing an inorganic active material and a carbon nanostructure, and then removing a solvent to prepare a composite of the inorganic active material and the carbon nanostructure.
